# EUROPEAN PATENT SPECIFICATION

(11) **EP 3 409 823 B1**
(45) Date of publication and mention of the grant of the patent: **20.11.2019**
(21) Application number: 18183777.4
(22) Date of filing: 22.06.2011
(51) Int. Cl.: D06F 33/02, H02J 13/00, H04L 12/12, H04L 12/28

(54) **NETWORK SYSTEM**
NETZWERKSYSTEM
SYSTÈME DE RÉSEAU

(30) Priority: 22.06.2010 KR 20100058922; 26.11.2010 WO PCT/IB2010/003388; 06.01.2011 KR 20110001543
(43) Date of publication of application: 05.12.2018
(62) Divisional of application: 11798391.6
(73) Proprietor: LG Electronics Inc., Seoul 07336 (KR)
(72) Inventor: AHN, Junho, 153-802 Seoul (KR); KIM, Yanghwan, 153-802 Seoul (KR); LEE, Hoonbong, 153-802 Seoul (KR); LEE, Koonseok, 153-802 Seoul (KR); KANG, Sunhee, 153-802 Seoul (KR); KANG, Seonghwan, 153-802 Seoul (KR); KWON, Yongtae, 153-802 Seoul (KR); KWON, Jaekuk, 153-802 Seoul (KR); KIM, Hoyoung, 153-802 Seoul (KR); PARK, Hyoungjun, 153-802 Seoul (KR); JUNG, Jimoon, 153-802 Seoul (KR); JOO, Younghoon, 153-802 Seoul (KR)
(74) Representative: Ter Meer Steinmeister & Partner

(56) References cited:
- EP-A1- 2 048 882
- US-A1- 2007 047 524
- US-A1- 2010 191 487
- UPNP FORUM: "UPnP Device Architecture 1.1", UPNP FORUM , pages I-VI,1, XP002562314, Retrieved from the Internet: URL:http://www.upnp.org/specs/arch/UPnP-ar ch-DeviceArchitecture-v1.1.pdf [retrieved on 2010-01-08]

## Description

### BACKGROUND

The present disclosure relates to a network system.

Providers simply provide energy sources such as electricity, water, and gas, and consumers simply use the supplied energy sources. This makes it difficult to effectively manage the production, distribution and use of energy. Therefore, a network system for effectively managing energy is in need.

The article UPnP™ Device Architecture 1.1, of October 15, 2008 describes UPNP devices and UPNP control devices having a device code.

US2010/191487 A1 relates to devices and methods for identifying an electrical device, and its state, in a network of electrical devices are disclosed. An energy monitoring device is programmed to identify an electrical device coupled to a power supply, and a state of the electrical device, from a change in successive measurements of the power supply. Algorithms for determining a load signature for an electrical device and its state are disclosed.

EP2 048 882 A1 relates to a display apparatus capable of visualizing and presenting connection status and setting information of each device existing in an HDMI network and easily switching input devices is provided. This display apparatus comprises a device search control means connected with a plurality of external devices through an HDMI cable based on the HDMI standard for defining the presence of the external devices and physical addresses in response to search demands of physical address defining a positional relation between the plurality of external devices and the display apparatus, and a device connection status presenting means for determining the connection status of the devices from the presence of the decided external device and the physical address to display in a tree structure, whereby a user can easily recognize the connection status between the display apparatus and the external devices.

US2007/047524 A1 relates to an information processing device is configured to set up a port as one of an output destination and an input destination corresponding to a peripheral device. The information processing device is configured to acquire identification information on the port from the peripheral device, and to determine whether identification information on the port is already set up in the peripheral device. The information processing device is configured to, when the determining unit determines that identification information on the port is not yet set up in the peripheral device, set up, in the peripheral device, identification information on the port corresponding to the peripheral device and setup, in the information processing device, the identification information on the port as a name of the port.

### SUMMARY

Embodiments provide a network system which can effectively manage an energy source.

The object is solved by the features of the independent claims. Preferred embodiments are given in the dependent claims.

In one embodiment, a network system according to claim 1 is provided.

The details of one or more embodiments are set forth in the accompanying drawings and the description below. Other features will be apparent from the description and drawings, and from the claims.

### BRIEF DESCRIPTION OF THE DRAWINGS

Fig. 1 is a view schematically showing an example of a network system according to the present disclosure.
Fig. 2 is a block diagram schematically showing an example of the network system according to the present disclosure.
Fig. 3 is a block diagram showing an information transmission process on the network system according to the present disclosure.
Fig. 4 is a view showing the communication structure of two components that constitute the network system according to a first embodiment.
Fig. 5 is a block diagram showing the detailed configuration of a communication device that constitutes a communication unit.
Fig. 6 is a view showing a communication performing process between a specific
component and a communication device according to the first embodiment.
Fig. 7 is a view showing a communication performing process between a specific component and a communication device according to a second embodiment.
Fig. 8 is a view showing the communication structure of components that constitute the network system according to a third embodiment.
Fig. 9 is a block diagram showing the detailed configuration of a first component in Fig. 8.
Fig. 10 is a view showing the communication structure of components that constitute the network system according to a fourth embodiment.
Fig. 11 is a block diagram showing the detailed configuration of a first component in Fig. 10.
Fig. 12 is a block diagram illustrating an example of a component constituting a network system according to an embodiment.
Fig. 13 is a schematic view illustrating an example of a network system according to an embodiment.
Fig. 14 is a flowchart for explaining a method of controlling an operation of an energy consumption component in a mobile device according to an embodiment.
Fig. 15 is a schematic view illustrating another example of the network system according to an embodiment.
Fig. 16 is a flowchart for explaining a method of controlling the network system according to configurations of Fig. 15.
Fig. 17 is a schematic view illustrating another example of the network system according to an embodiment.
Fig. 18 is a flowchart for explaining a method of controlling the network system according to configurations of Fig. 17.
Fig. 19 is a schematic view illustrating another example of the network system according to an embodiment.
Fig. 20 is a schematic block diagram of the network system of Fig. 19.
Fig. 21 is a flowchart illustrating a communication connection process between a plurality of components of Fig. 19.
Fig. 22 is a flowchart illustrating a control method when a specific component is turned off according to an embodiment.
Figs. 23 to 26 are views illustrating a user interface of a specific component according to another embodiment.
Figs. 27 to 26 are views illustrating a user interface of a specific component according to another embodiment.
Fig. 28 is a schematic block diagram illustrating a network system for synchronizing components with each other according to another embodiment.
Fig. 29 is a view illustrating a synchronized state between the components of Fig. 28.
Fig. 30 is a flowchart illustrating a process of synchronizing the components of Fig. 28.
Fig. 31 is a schematic block diagram illustrating a network system according to another embodiment.

### DETAILED DESCRIPTION OF THE EMBODIMENTS

Reference will now be made in detail to the embodiments of the present disclosure, examples of which are illustrated in the accompanying drawings.

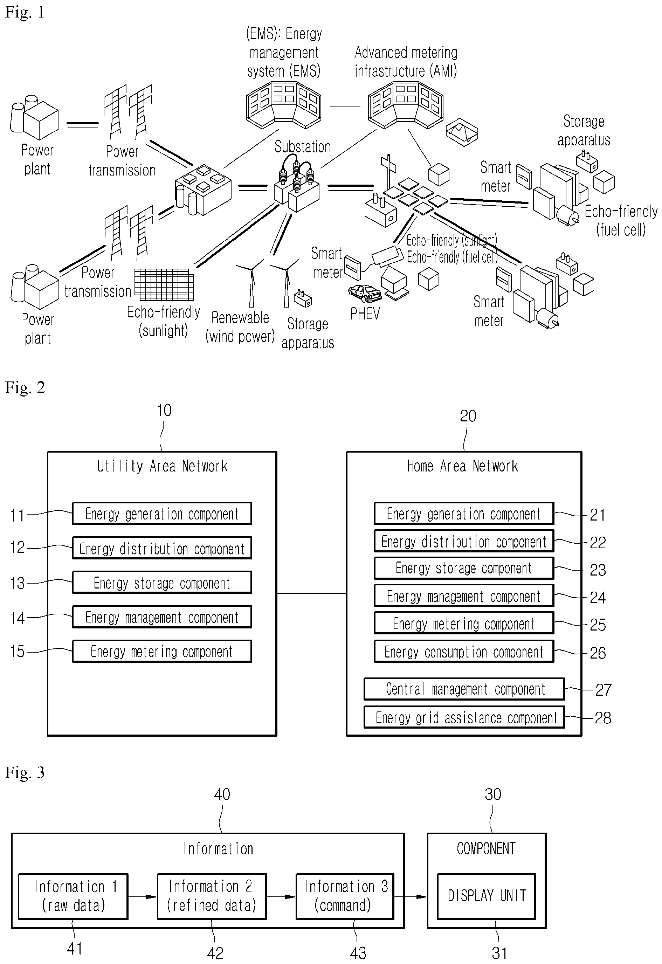

Fig. 1 is a view schematically showing an example of a network system according to the present disclosure.

The network system is a system for managing an energy source such as electricity, water or gas. The energy source means one of which amount generated or used can be metered. Therefore, even a source not mentioned above may be used as the energy source. Hereinafter, electricity will be described as an example of the energy source, and details of this specification may be identically applied to other energy sources.

Referring to Fig. 1, a network system according to an embodiment includes a power plant for producing electricity. The power plant may include a power plant for producing electricity through a thermal power generation or nuclear power generation and a power plant using water power, sunlight power, wind power or the like which is eco-friendly energy.

The electricity produced in the power plant is transmitted to a sub-control center through a power transmission line, and the sub-control center transmits the electricity to a substation so that the electricity is distributed to customers such as houses or offices.

Electricity produced by the eco-friendly energy is also transmitted to the substation so as to be distributed to each of the customers. The electricity transmitted from the substation is distributed to each of the offices or houses through electricity power storage, or is directly distributed to each of the offices or houses.

In a house using a home area network (HAN), electricity may be produced by itself through sunlight, fuel cells built in a plug-in hybrid electric vehicle (PHEV), or the like. Also, the produced electricity may be stored or distributed, or surplus electricity may be resold to the outside world.

The network system may include a smart meter for detecting the amount of electricity used in each customer (house, office or the like) in real time, and an advanced metering infrastructure (AMI) for metering the amount of electricity used in a plurality of customers.

The network system may further include an energy management system (EMS) for managing energy. The EMS may generate information on operations of one or more components with respect to energy (production of energy, distribution of energy, usage of energy, storage of energy, and the like). The EMS may generate at least a command for the operations of the components.

In this specification, a function or solution performed by the EMS may be referred to as an energy management function or energy management solution.

In the network system, one or more EMSs may be provided as a separate configuration, or the EMS may be included as an energy management function or energy management solution in one or more components.

Fig. 2 is a block diagram schematically showing an example of the network system according to the present disclosure.

Referring to Figs. 1 and 2, the network system according to the present disclosure is configured by a plurality of components. For example, the components of the network system are a power plant, a substation, a sub-control center, an EMS, electric home appliances, a smart meter, a storage battery, a web server, an AMI, a home server, and the like.

In the present disclosure, each of the components may be configured by a plurality of subcomponents. As an example, in a case of one component is an electric home appliance, subcomponents may be a microcomputer (MICOM), a heater, a display and the like. That is, all that perform a specific function may be components in the present disclosure, and such components constitute the network system of the present disclosure. Two components may communicate with each other by means of a communication unit. One network may be one component or may be configured by a plurality of components.

In this specification, the network system in which communication information is related to an energy source may be referred to as an energy grid.

A network system according to an embodiment may include a utility area network (UAN) 10 and a home area network (HAN) 20. The UAN 10 and the HAN 20 may perform wired or wireless communication by means of a communication unit, and may perform two-way communication.

In this specification, the term "home" means not only a household as a lexical meaning but also a group in which specific components such as buildings or companies gather. Also, the term "utility" means a group in which specific components outside the home gather.

The UAN 10 includes an energy generation component 11 for generating energy, an energy distribution component 12 for distributing or transmitting energy, an energy storage component 13 for storing energy, an energy management component 14 for managing energy, and an energy metering component 15 for metering information related to energy.

In a case where one or more components that constitute the UAN 10 consume energy, the components that consume the energy may be energy consumption components.

The energy consumption component is a component corresponding to the energy consumption component 26 that constitutes the HAN 20. The energy consumption component may be the same component as the energy consumption component 26 or may be another component distinguished from the energy consumption component 26.

The energy generation component 11 may be a power plant as an example. The energy distribution component 12 distributes or transmits energy generated in the energy generation component 11 and/or energy stored in the energy storage component 13 to the energy consumption component 26 that consumes the energy. The energy distribution component 12 may be a power transmitter, substation, sub-control center, or the like.

The energy storage component 13 may be a storage battery, and the energy management component 14 generates information for driving one or more of the energy generation component 11, the energy distribution component 12, the energy storage component 13 and the energy consumption component 26, related to energy. The energy management component 14 may generate at least a command for the operation of a specific component.

The energy management component 14 may be an EMS. The energy metering component 15 may meter information related to the generation of energy, the distribution of energy, the usage of energy, the storage of energy, and the like. The energy metering component 15 may be an AMI as an example. The energy management component 14 may be a separate configuration, or may be included in another component as an energy management function.

The UAN 10 may communicate with the HAN 20 by a terminal component (not shown). That is, information generated or transferred in a specific component that constitutes the UAN 10 may be transmitted to the HAN 20 through the terminal component, or information generated or transferred in another component that constitutes the HAN 20 may be received to the UAN 10 through the terminal component. The terminal component may be a gate way as an example. The terminal component may be provided to one or more of the UAN 10 and the HAN 20.

The terminal component may be a component necessary for transmitting/receiving information between the UAN and the HAN.

Two components that constitute the UAN 10 may communicate with each other by means of a communication unit.

The HAN 20 includes an energy generation component 21 for generating energy, an energy distribution component 22 for distributing energy, an energy storage component 23 for storing energy, an energy management component 24 for managing energy, an energy metering component 25 for metering information related to energy, an energy consumption component 26 for consuming energy, a central management component 27 for controlling a plurality of components, and an energy grid assistance component 28.

The energy generation component 21 may be a home power generator, and the energy storage component 23 may be a storage battery. The energy management component 24 may be an EMS. As an example, the energy generation component 21 may be a solar cell, a fuel cell, a wind power generator, a power generator using subterranean heat, a power generator using seawater, or the like.

The energy storage component 23 may perform storage using energy generated from the energy generation component 21. Therefore, in view of the use of energy, the energy storage component 23 and the energy generation component 11 may be an energy using component that uses energy together with the energy consumption component 26. That is, the energy using component may include at least an energy consumption component, an energy generation component and an energy storage component. In a case where the energy management component uses energy, it may be included in the energy using component.

In view of the supplied energy, the energy storage component 23, the energy consumption component and the energy generation component 11 may be an energy supplied component to which energy is supplied.

The energy metering component 25 may meter information related to the generation of energy, the distribution of energy, the usage of energy, the storage of energy, and the like. The energy metering component 25 may be a smart meter as an example. The energy consumption component 26 may be, as an example, an electric home appliance or a heater, motor, display or the like, which constitutes the electric home appliance. In this embodiment, there is no limitation in the kind of the energy consumption component 26.

Specifically, the energy generation component 21 may be another component of the UAN 10, which generates energy to be supplied to the HAN 20.

The energy management component 24 may be provided as a separate configuration or may be included in another component as an energy management function. As an example, the energy management function may be performed by a control component that controls the energy consumption component. In a case where the control component performs the energy management function, it may be an energy management component.

Specifically, the energy management component 14 that constitutes the UAN 10 or the energy management component 24 that constitutes the HAN 20 may be built in one or more of the plurality of components that constitute the networks 10 and 20, or may exist as a separate device. The energy management component 24 may recognize the information related to energy (energy information) and the state information of a component controlled by the energy management component 24.

The energy generation component 21, the energy distribution component 22 and the energy storage component 23 may be individual components, or may constitute a single component.

The central management component 27 may be, as an example, a home server for controlling a plurality of electric home appliances.

The energy grid assistance component 28 is a component having a primary function while performing an additional function for the energy grid. For example, the energy grid assistance component 28 may be a web service providing component (e.g., a computer or the like), mobile device, television, or the like.

The mobile device may receive energy information or additional information (described later), and control the operation of at least the energy consumption component 26 using the received information.

Two components that constitute the HAN 20 may communicate with each other by means of a communication unit.

The energy generation components 11 and 21, the energy distribution components 12 and 22, the energy storage components 13 and 23, the energy management components 14 and 24, the energy metering components 15 and 25, the energy consumption component 26 and the central management component 27 may independently exist, or two or more of them may constitute a single component.

For example, the energy management component 14 or 24, the energy metering component 15 or 25 and the central management component 27 may exist as single components so as to be configured as a smart meter, an EMS and a home server, which perform their functions, respectively. Alternatively, the energy management component 14 or 24, the energy metering component 15 or 25 and the central management component 27 may constitute a single system.

When a function is performed, it may be sequentially performed in a plurality of components and/or communication units. For example, an energy management function may be sequentially performed in the energy management component, the energy metering component and the energy consumption component.

In the network system, a plurality of UANs 10 may communicate with a single HAN 20, and a single UAN 10 may communicate with a plurality of HANs 20.

The component with a specific function, which constitutes the UAN and the HAN, may be configured as a plurality of components. For example, the energy generation component, the energy consumption component or the like may be configured as a plurality of components.

In this specification, each of the components that constitute the UAN and HAN may having a function performing component that performs its own function, or each of the components itself may be a function performing component.

As an example, in a case where the energy consumption component is an electric product, the electric product has a function performing component such as a heater, compressor, motor or display. As another example, in a case where the energy consumption component is a heater, compressor, motor, display or the like, the energy consumption component itself is a function performing component.

Fig. 3 is a block diagram showing an information transmission process on the network system according to the present disclosure.

Referring to Fig. 3, in the network system according to the present disclosure, a specific component 30 may receive information related to energy (hereinafter, referred to as energy information 40) by means of a communication unit. The specific component 30 may further receive additional information (environment information, time information and the like) by means of the communication unit. In this instance, the information may be received from another component. That is, at least energy information is contained in the received information.

The specific component 30 may be a component that constitutes the UAN 10 or a component that constitutes the HAN 20.

As described above, the energy information 40 may be one of information related to electricity, water, gas and the like. Hereinafter, information related to electricity will be described as an example of the energy information, but information related to other energy sources may be identically applied.

For example, the kind of information related to the electricity may include time-based pricing, curtailment, grid emergency, grid reliability, energy increment, operation priority, and the like.

The information may be divided into scheduled information previously produced based on previous information, and real-time information changed in real time. The scheduled information and the real-time information may be divided by whether or not predict information after the current time (in the future).

The energy information 40 may be transmitted/received as a true or false signal such as a Boolean signal on the network system, or may be transmitted/received as a real price. Alternatively, the energy information 40 may be transmitted/received by being divided into a plurality of levels.

The energy information 40 may be divided into time of use (TOU) information, critical peak pattern (CPP) information or real time pattern (RTP) information according to the change in the pattern of data with respect to time.

According to the TOU information, a data is changed step by step depending on time. According to the CPP information, a data is changed step by step or in real time depending on time, and emphasis is displayed at a specific point of time. According to RTP information, a data is changed in real time depending on time.

In a case where the energy information is time-based pricing information as an example, the time-based pricing information is changed. The time-based pricing information may be transmitted/received as a true or false signal such as a Boolean signal on the network system, or may be transmitted/received as a real price. Alternatively, the time-based pricing information may be transmitted/received by being divided into a plurality of levels.

In a case where the specific component 30 receives a true or false signal such as a Boolean signal, one signal may be recognized as an on-peak signal, and the other signal may be recognized as an off-peak signal.

Alternatively, the specific component 30 may recognize information on at least one drive, which contains the time-based information, and may recognize an on-peak or off-peak signal by comparing the value of the recognized information with the value of reference information.

For example, in a case where the specific component 30 recognizes information divided into levels or real pricing information, it recognizes an on-peak or off-peak signals by comparing the value of the recognized information with the value of reference information.

In this case, the value of the information on drive may be at least one of time-based pricing, electric energy, the variation of time-based pricing, the variation of electric energy, the average of time-based pricing and the average of electric energy. The value of reference information may be at least one of an average, the average between maximum and minimum values of power information during a predetermined period of time and the reference variation of power information during the predetermined period of time (e.g., the slope of consumed electric energy per unit time).

The value of reference information may be determined in real time or may be previously determined. The value of reference information may be determined on the UAN or may be determined on the HAN (a customer's direct input or an input from the energy management component, the central management component or the like).

In a case where the specific component 30 (e.g., the energy consumption component) recognizes an on-peak signal (e.g., at a point of time of recognition), an output may be determined as zero (stop or maintenance of a stop state) or may be decreased. If necessary, the output may be restored or increased. The driving scheme of the specific component may be previously determined before the specific component is operated, or may be changed when the specific component recognizes an on-peak signal posterior to the start of operation.

Alternatively, in a case where the specific component 30 recognizes an on-peak signal (e.g., at a point of time of recognition), the output is maintained under an operable condition. In this case, the operable condition means that the value of the information on drive is less than a predetermined reference. The value of the information on drive may be time-based pricing, consumed electric energy, operation time, or the like. The predetermined reference may be a relative or absolute value.

The predetermined reference may be determined in real time or may be previously determined. The predetermined reference may be determined on the UAN or may be determined on the HAN (a customer's direct input or an input from the energy management component, the central management component or the like).

Alternatively, in a case where the specific component 30 recognizes high-cost information, the output of the specific component may be maintained or increased when the difference between a state information value and a reference value is within a predetermined range. For example, in a case where a compressor of a refrigerator is not operated in a low-cost section, the temperature of a cool chamber or freezing chamber is increased. Therefore, the compressor is necessarily turned on when the temperature of the cool chamber or freezing chamber approaches a reference temperature. In a case where a high-cost section comes after the compressor is turned on, the compressor maintains a current output when the difference between the temperature of the cool chamber or freezing chamber and the reference temperature is within a predetermined range. In a case where a user selects a button for cancelling power saving in the state that the specific component 30 recognizes the high-cost information, the output of the specific component may be maintained.

Alternatively, in a case where the specific component 30 recognizes an on-peak signal (e.g., at a point of time of recognition), the output may be increased. However, although the output is increased at the point of time when the specific component recognizes the on-peak signal, the total output amount of the specific component during the entire drive period may be decreased or maintained as compared with that when the specific component is operated at a normal output level. Alternatively, although the output is increased at the point of time when the specific component recognizes the on-peak signal, the total consumed power or total time-based pricing of the specific component during the entire operation period may be decreased as compared that when the specific component is operated at a normal output level.

In a case where the specific component 30 recognizes an off-peak signal (e.g., at a point of time of recognition), the output may be increased. For example, in a case where the operation reservation of the specific component is set up, the drive of the specific component may be started before the setup time, or a component having a large output among a plurality of components may be first driven. In a case where the specific component is a refrigerator, supercooling may be performed by increasing an output as compared with the existing output (change in the state of cool air that is a medium for performing the function of the refrigerator). In a case where the specific component is a washing machine or washer, hot water may be stored by driving a heater earlier than the time when the heater is to be operated (storage of hot water that is an additional medium for performing the function of the washing machine or washer). Alternatively, in a case where the specific component is a refrigerator, cool air may be stored in a separate supercooling chamber by increasing an output as compared with the existing output. Alternatively, in a case where the specific component recognizes an off-peak signal (e.g., at a point of time of recognition), electricity may be stored.

The curtailment information is information related to a mode in which the specific component is stopped or a small amount of time-based pricing is taken. As an example, the curtailment information may be transmitted/received as a true or false signal such as a Boolean signal on the network system.

If the specific component 30 recognizes curtailment information, the output may be determined as zero (stop or maintenance of a stop state) or may be decreased as described above.

The grid emergency information is information related to a power failure or the like. As an example, the grid emergency information may be transmitted/received as a true or false signal such as a Boolean signal on the network system. The information related to a power failure or the like has a relation with the reliability of a component using energy.

In a case where the specific component 30 recognizes grid emergency information, it may be immediately shut down.

The grid reliability information is information related to the supply amount of electricity supplied or information related to the quality of electricity. The grid reliability information may be transmitted/received as a true or false signal such as a Boolean signal on the network system, or may be determined by a component (e.g., an electric home appliance) through the frequency of AC power supplied to the component.

That is, if a frequency lower than the frequency of AC power supplied to the component is sensed, it may be determined that the amount of electricity supplied is small (information on the deficiency of the amount of electricity supplied). If a frequency higher than the frequency of AC power supplied to the component is sensed, it may be determined that the amount of electricity supplied is large (information on the excess of the amount of electricity supplied).

In a case where the specific component recognizes shortage of the amount of electricity or poor quality of electricity in the grid reliability information, an output may be determined as zero (stop or maintenance of a stop state) or may be decreased. If necessary, the output may be restored or increased.

On the other hand, in a case where the specific component recognizes the information on the excess of the amount of electricity supplied, the output may be increased, or the operation may be converted from an off-state to an on-state.

The energy increment information is information related to a state that surplus electricity is generated because the amount of electricity used by a component is less than that of power generation. As an example, the energy increment information may be transmitted/received as a true or false signal such as a Boolean signal on the network system.

In a case where the specific component 30 recognizes energy increment information, the output may be increased. For example, in a case where the operation reservation of the specific component is set up, the drive of the specific component may be started before the setup time, or a component having a large output among a plurality of components may be first driven. In a case where the specific component is a refrigerator, supercooling may be performed by increasing an output as compared with the existing output. In a case where the specific component is a washing machine or a washer, hot water may be stored by driving a heater earlier than the time when the heater is to be operated. Alternatively, in a case where the specific component recognizes an off-peak signal (e.g., at a point of time of recognition), electricity may be stored.

Meanwhile, in a case where the specific component 30 is the energy storage component 13 or 23, the energy storage component 13 or 23 may store electricity by receiving the electricity supplied from the UAN, for example, when electricity storage cost is smaller than a predetermined value.

However, in a case where the energy storage component 23 is connected to the energy generation component 21 that constitutes the HAN, it may continuously store energy generated by the energy generation component 21 until the electricity storage is completed. That is, the energy generated while the energy generation component 21 generates energy may be stored in the energy storage component 23.

The presence of completion of the electricity storage is determined while the energy storage component 13 or 23 stores electricity. In a case where the electricity storage is completed, the electricity supply for the electricity storage is cut off. Specifically, the presence of completion of the electricity storage may be determined using a sensor that senses the voltage, temperature or current of the energy storage component 13 or 23. The cutoff of the electricity supply may be performed using a switch (or circuit breaker) provided to a supply stage through which the electricity is supplied to the energy storage unit 13 or 23.

The electricity storage cost may be cost consumed in the electricity storage for a specific time period or electricity cost at a specific time.

As an example, in a case where the electricity storage cost is in an off-peak section (in a case where the specific component recognizes low-cost information which will be described later), the energy storage component 13 or 23 may store electricity. Alternatively, in a case where an on-peak section corresponds to an allowance section (in a case where the specific component recognizes high-cost information which will be described later), the energy storage component 13 or 23 may store in the on-peak section. In this instance, the allowance section is a section in which a power consumption information value is less than a predetermined reference. The power consumption information value may be a electricity cost, a power consumption amount, a time range, or the like. The predetermined reference may be a predetermined cost, a predetermined power consumption amount, a predetermined time, or the like. The predetermined reference may be a relative value or absolute value, and may be changed automatically or manually.

The energy storage component 13 or 23 may store a counter electromotive force generated when an energy consumption component that is rotatably operated or a motor provided to the energy consumption component is stopped (rotated).

Alternatively, the energy storage component 13 or 23 may store electricity using an energy consumption component that is rotatably operated or a motor provided to the energy consumption component. For example, in a case where the energy consumption component is a refrigerator, the energy storage component 13 or 23 may store electricity generated when a fan motor provided to the refrigerator is rotated (the fan motor may serve as a power generator or may be connected to the power generator). Alternatively, in a case where the energy consumption component is a washing machine, the energy storage component 13 or 23 may store electricity generated when a motor that rotates a drum for accommodating the laundry is rotated. In a case where the energy consumption component is a cooking appliance, the energy storage component 13 or 23 may store electricity generated when a motor for rotating a cooling fan is rotated. In a case where the energy consumption component is an air cleaner, the energy storage component 13 or 23 may store electricity generated when a motor for rotating a fan is rotated. That is, in this embodiment, in a case where a motor is provided regardless of the kind of the energy consumption component, the energy storage component 13 or 23 may store electricity generated when the motor is rotated. Alternatively, in a case where a power generator is connected to a fan rotated by the flow of air (natural flow or forcible flow), the energy storage component 13 or 23 may store electricity generated by the power generator.

The electricity stored in the energy component 13 or 23 may be supplied to one or more energy consumption components 26. In a case where electricity cost is higher than a reference value, the electricity stored in the energy component 13 or 23 may be supplied to the energy consumption component 26. As an example, in a case where the electricity cost is an on-peak (in a case where the specific component recognizes the high-cost information), the electricity stored in the energy storage component 13 or 23 may be supplied to the energy consumption component 26. In a case where the electricity cost is an off-peak (in a case where the specific component recognizes the low-cost information) but is close to the on-peak, the electricity stored in the energy storage component 13 or 21 may be supplied to the energy consumption component. If the electricity stored in the energy storage component 13 or 23 is less than a predetermined value, electricity generated in the energy generation component 11 is supplied to the energy consumption component. Thus, it is possible to prevent the operation of the energy consumption component from being stopped due to the cutoff of the electricity supply while the energy consumption component is operated.

In a case where the supply of electricity generated in the energy generation component 11 is cut off by interruption of electric power, the electricity stored in the energy component 13 or 23 may be supplied to the energy consumption component. In a case where the energy consumption component is an electric product, the electricity stored in the energy storage component 13 or 23 may be supplied to a communication unit or control unit provided to the electric product.

The electricity stored in the energy component 13 or 23 may be supplied to a portion of a plurality of energy consumption components. As an example, the stored electricity may be supplied to an electric product such as a refrigerator required in continuous operation among a plurality of electric products. Alternatively, the stored electricity may be supplied to an energy consumption component with relatively low power among a plurality of energy consumption components that constitute one electric product. It will be apparent that the stored electricity is supplied to an energy consumption component with high power. Alternatively, when a course using a relatively small amount of power is performed among a plurality of courses in which an electric product is performed, the stored electricity may be supplied. It will be apparent that the stored electricity may be supplied even when a course using a large amount of power is performed.

Meanwhile, in a case where electricity is generated and stored by a fan or motor as described above, the electricity stored in the energy storage component 13 or 23 may be supplied to an energy consumption unit with relatively low power. As an example, the electricity stored in the energy storage component 13 or 23 may be supplied to an LED lamp, a display, a control unit, a communication unit, a low-power heater, or the like. Alternatively, in a case where the energy consumption component performs a plurality of courses, the electricity stored in the energy storage component 13 or 23 may be supplied to the energy consumption component in a course that requires low power.

The energy storage component 23 may be built in connected to one energy consumption component. Alternatively, a plurality of energy storage components 23 may be built in or connected to a plurality of energy consumption components, respectively. Alternatively, a plurality of energy storage components 23 may be built in or connected to one energy consumption component. The plurality of energy storage components 23 may be connected to one another to share the stored electricity.

Among the information related to energy, the on-peak information, the curtailment information and information on the deficiency of the amount of electricity supplied may be recognized as high-cost information considered that energy cost is relatively expensive. In this instance, the section in which the high-cost information is recognized by the specific component may referred to as a low-cost section.

On the other hand, among the information related to energy, the off-peak information, the energy increment information and the information on the excess of the amount of electricity supplied may be recognized as low-cost information considered that energy cost is relatively cheap. In this instance, the section in which the low-cost information is recognized by the specific component may be referred to as a low-cost section.

The information related to the fluctuation of the energy cost (high-cost or low-cost information) may be recognized as information for determining a power saving driving scheme of the specific component (e.g., the energy consumption component). That is, the information related to the fluctuation of the energy cost may be recognized by dividing a time slot (time period) based on energy cost or pricing period (pricing zone) for determining a driving scheme of the specific component into at least two or more.

A high period means a high price time period (period of high cost) or a high pricing period and a low period means a low price time period (period of low cost) and a low pricing period.

As an example, in a case where the information related to energy is recognized as a Boolean signal, the time slot (time period) based on energy cost or pricing period (pricing zone) for determining a driving scheme of the specific component may be divided into two. In a case where the information related to energy is divided into a plurality of levels or recognized as real-time information, the time period or pricing period may be divided into three or more.

Meanwhile, the information related to energy cost corresponding to at least time may be recognized as information for determining a power saving driving scheme of the specific component. That is, the information related to energy cost may be recognized by dividing a time slot (time period) or pricing zone (time period) into at least two or more. As described above, the divided time period or pricing period may be determined based on the kinds of the recognized information (the Bloolean signal, the plurality of levels and the real-time information).

In other words, the information related to fluctuation of energy cost may be recognized by dividing a determination factor for driving the specific component into two or more, and functions on time and energy cost may be included in the determination factor.

In a case where the information related to energy cost is divided into two levels or more, the driving scheme of the specific component may be determined according to the information divided into levels.

On the other hand, in a case where the recognized information related to energy cost is not divided based on a specific reference (e.g., real-time cost information), it is compared with predetermined information, and the driving scheme of the specific component may be determined based on the compared result.

Here, the predetermined information may be reference information (e.g. reference value) for dividing the information related to energy cost, and the compared result may be whether not the information related to energy cost is more or less than the reference value.

Specifically, each of the kinds of information related to energy may be divided into first information 41 that is raw information, second information 42 that is refined information, and third information 43 that is information for performing the function of the specific component. That is, the first information is a raw data, the second information is a refined data, and the third information is a command for performing the function of the specific component.

The information related to energy is included a signal, and the signal is transmitted. In this instance, one or more of the first to third information may be transmitted several times while the content of the information is not converted but only the signal including the information is converted.

For example, as shown in Fig. 3, a component that receives a signal including the first information may convert only the signal and transmit a new signal including the first information to another component.

Therefore, it is described in this embodiment that the conversion of signal is a different concept from the conversion of information. In this instance, it can be readily understood that when the first information is converted into the second information, the signal including the first information is also converted into the signal including the second information.

However, the third information may be transmitted several times in the state that the content of the third information is converted or in the state that only the signal including the third information is converted while the content of the third information is identically maintained.

Specifically, in a case where the first information is raw information on time-based pricing, the second information may be refined information on the time-based pricing. The refined information on the time-based pricing is information in which the time-based pricing is divided into a plurality of levels or analysis information. The third information is a command generated based on the second information.

The specific component may generate, transmit or receive one or more of the first to third information. The first to third information are not necessarily transmitted or received in sequence. Only a plurality of pieces of third information without the first and second information may be transmitted in sequence or parallel. Alternatively, the first and third information may be transmitted or received together, the second and third information may be transmitted or received together, or the first and second information may be transmitted or received together.

As an example, in a case where the specific component receives the first information, it may transmit the second information or may transmit the second and third information.

In a case where the specific information receives only the third information, it may generate and transmit new third information.

Meanwhile, in the relation between two pieces of information, one is a message and the other is a response for the message. Thus, each of the components that constitute the network system may transmit or receive a message. In a case where each of the components receives a message, it may respond to the message. Therefore, in the case of an individual component, the transmission of a message is a relative concept with the response for the message.

The message may include a data (first or second information) and/or a command (third information).

The command (third information) may include a command for storing the data, a command for generating the data, a command for processing the data (including the generation of an additional data), a command for generating an additional command, a command for transmitting the additionally generated command, a command for transmitting a received command, and the like.

In this specification, the response for the received message means storage of the data, processing of the data (including generation of an additional data), generation of a new command, transmission of the newly generated command, simple transmission of a received command (including generation of a command for transmitting the received command to another component), operation, transmission of the stored information, transmission of an acknowledge message (acknowledge character or negative acknowledge character), or the like.

For example, in a case where the message is first information, the specific component that receives the first information may generate second information by processing the first information, or may generate the second information and new third information, as a response for the message.

The specific component that receives the message may provide a response related to energy. Here, the term "response" may be understood as a concept including an operation through which the specific component can perform a function. As an example, the HAN 20 may perform an operation related to energy by receiving a message.

The response (operation) related to energy, provided by the specific component, will be described in detail. For example, the specific component may be an energy consumption component.

The energy consumption component may be driven so that the energy cost when it is driven based on the recognition for energy information is reduced as compared with that when it is driven without the recognition for energy information.

The specific component may include a plurality of modes in which it is driven to perform its own function. The plurality of modes are a first mode and a second mode in which energy cost is relatively saved as compared with that in the first mode. The specific component may be driven in at least one of the first and second modes.

Here, the first mode may be a general mode and the second mode may be a power saving mode. Alternatively, the first and second modes may all be power saving modes.

The general mode may be understood as a mode in which the function of the specific component is performed without recognition of energy information. On the other hand, the power saving mode may be understood as a mode in which the function of the specific component is performed based on the recognition of energy information so as to save energy cost.

In a case where the first and second modes are power saving modes, the first mode may be specified as a driving scheme for saving energy cost and the second mode may be specified as a driving scheme in which the energy cost in the second mode is more saved than that in the first mode.

Meanwhile, in a case where the specific component (e.g., the energy consumption component) is driven, at least a portion is recognized in a driving scheme including at least drive time and course. In this case, an unrecognized portion may be generated so as to save energy cost, and a recognized portion may be converted into another scheme.

For example, at least a portion of the driving scheme may be recognized under the control of the energy management component, the control of the energy consumption component, or the like. In a case where a specific driving scheme is further required so as to save energy cost, an unrecognized portion of the driving scheme may be newly generated, and a recognized portion may be converted into another scheme so as to save energy.

It will be apparent that the process of generating the unrecognized portion may be omitted. In this case, the process of converting the recognized portion into another scheme. On the other hand, the process of converting the recognized portion into another scheme may be omitted. In this case, the process of newly generating the unrecognized portion may be performed.

The drive time may include a drive start time or drive end time. The course may include a drive period of the specific component and the power of the specific component.

The generated scheme or converted scheme may be a scheme recommended by the specific component so as to save energy cost. Here, the specific component may be an energy consumption component (control component) or the energy management component.

As an example, in a case where the recognized scheme is a specific drive time, the specific drive time may be converted into another time so as to save energy cost, and a specific course may be generated.

On the other hand, in a case where the recognized scheme is a specific course, the specific course may be converted into another course so as to save energy cost, and a specific time may be generated.

Under the control described above, a change in time or power may be made with respect to the output function of the specific component based on time.

The generated scheme or converted scheme may be performed within a set range. That is, in the process of recognizing at least a portion of the driving scheme, the generation or conversion of the driving scheme may be performed within a predetermined reference in which the recognized portion appears (e.g., restriction set by a user, constraint set under the control of the energy management component or energy consumption component, or the like).

Therefore, in a case where the set range is out of the predetermined reference, it is restricted to generate the unrecognized portion or to convert the recognized portion into another scheme.

Another embodiment is proposed.

Cost information may further included in the recognized driving scheme. That is, in a case where the cost information is recognized, a portion related to the drive time or course may be generated. The generated driving scheme may be recommended.

Meanwhile, a response of the specific component based on the information related to the fluctuation of the energy cost (high-cost or low-cost information), e.g., a power control for power saving driving, may be performed. An output decrease (including an output of zero) or output increase may be included in the output control.

It is as described above that the output is decreased or zero, maintained or increased based on the recognition for the information (on-peak or off-peak) related to energy cost.

If high-cost information is recognized, the output may be zero or decreased. Specifically, the output in the recognition of the high-cost information may be decreased as compared with that in the recognition of low-cost information. As described above, the decrease of the output may be previously determined before the specific component is operated, or may be changed when the high-cost information is recognized posterior to the start of the operation of the specific component.

In a case where the output of the specific component is zero or decreased, the function to be performed by the specific component may be lost as compared with a normal case. Therefore, a response for restoring the lost function may be performed.

As an example, after the output of the specific component is decreased, the specific component may be controlled so that the total operation time of the specific component is increased or so that the output is increased in at least a time period.

In other words, if specific reference information related to energy information is recognized in a period after the output of the specific component is controlled, the response for controlling the output may be released. Here, the term "period" may be divided based on a point of time when the high-cost information is recognized.

The total operation time may be understood as a time approaching a specific target in the process of performing the function of the specific component. As an example, in a case where the specific component is an electric appliance (washing machine, drying machine, cooking appliance or the like) intermittently driven (or driven in a specific course), the total operation time may be understood as a time until a corresponding course is completed.

On the other hand, in a case where the specific component is an electric appliance (refrigerator, water purifier, or the like) driven at normal times, the total operation time may be understood as a time approaching a target set for performing the function of the specific component. For example, the set target may be a target temperature, a target amount of ice produced, or a target amount of clean water in the refrigerator.

The total operation time may be increased as compared with the operation time set before the output of the specific component is decreased. In a case where the output of the specific component is not decreased, the total operation time may be increased as compared with the operation time of the specific component. However, although the total operation time of the specific component is increased, the specific component is controlled so that the total energy cost generated through the drive of the specific component can be saved as compared with that when the output of the specific component is not decreased.

If the high-cost information is recognized, the output of the specific component may be increased.

However, although the output is increased at a point of time when the high-cost information is recognized, the total output of the specific component during the entire driving period may be decreased or maintained as compared with that when the specific component is operated under a normal output. Alternatively, although the output is increased at a point of time when the high-cost information is recognized, the total power consumption or total time-based pricing of the specific component during the entire driving period may be decreased as compared with that when the specific component is operated under the normal output.

If the low-cost information is recognized, the output of the specific component may be increased. For example, in a case where the operation reservation of the specific component is set up, the driving of the specific component may be started before the setup time, or a component having a large output in a plurality of components may be first driven. In a case where the specific component is a refrigerator, supercooling may be performed by increasing an output as compared with the existing output. In a case where the specific component is a washing machine or a washer, hot water may be stored by driving a heater earlier than the time when the heater is to be operated. Alternatively, in a case where the specific component recognizes an off-peak signal (e.g., at a point of time of recognition), electricity may be stored.

Meanwhile, in a case of a specific condition (additional condition) is generated based on the information related to the fluctuation of the energy cost (high-cost or low-cost information), the response of the specific component, e.g., the output control for power saving driving, may be limited. That is, the output of the specific component may be maintained.

Here, the term "limitation" may be understood as the release of the output control performed or not performed.

The specific condition includes a case where influence on energy cost is minute even though the output control of the specific component is not performed or a case where it is necessary to prevent a function to be performed by the specific component from being degraded when the output of the specific component is controlled.

Whether or not the influence on the energy cost is minute may be determined based on a predetermined reference (time-based pricing, power consumption or information on operation time). The predetermined reference may be a relative or absolute value.

The case where the function to be performed by the specific component is degraded may be considered as a case where the specific component is a defrosting heater, for example.

In a case where it is controlled to decrease the output in a high-cost time period and to increase the output in the low-cost time period, the driving of the defrosting heater is more frequently performed than that during a normal time (setup period). In this case, the temperature of a storage room in the refrigerator is increased, and thus, the control of the output can be limited.

Meanwhile, the specific component 30 may include a display unit 31 for displaying information. In this embodiment, the term "information display" means that visual, auditory, olfactory and tactile information is known to the outside. The display unit 31 may include a touch screen for selecting or inputting information. Alternatively, the specific component 30 may include a separate input unit for inputting information by cable or radio.

All the information (energy information or additional information except the energy information) described above may be displayed in the display unit 31. One of the energy information and additional information may be displayed, or two or more pieces of information may be simultaneously displayed. That is, two or more pieces of information may be simultaneously displayed in the display unit 31. As an example, in a case where two or more pieces of information are simultaneously displayed, any one of the information is selected. Then, the selected screen may be enlarged, and the unselected screen may reduced. As another example, if any one of the two or more pieces of information is selected, the selected screen may be enlarged, and the unselected screen may disappear. In a case where specific information is selected and the selected screen is enlarged, information more specific that the previous information or information different from the previous information may be displayed on the enlarged screen. For example, in a case where the selected information is a character, graphic information may be displayed on the enlarged screen, or two or more pieces of information may be sequentially displayed on the enlarged screen. In a case where two or more pieces of information are displayed in the display unit 31, two or more relative positions may be varied.

Information except energy cost information and energy cost may be displayed in the display unit 31. The energy cost information may include current cost, past cost or estimated cost in the future. The energy cost information may include not only information on cost information in a specific period or time but also information on cost used with respect to the operation of a component, cost used in the present, cost to be used (estimation cost), or the like.

The information except the energy cost information may include information on energy reduction, emergency situation, grid safety, power generation quantity, operation priority, energy consumption, energy supply amount, information (e.g., cost change rate, average cost, levle or the like) newly generated based on two or more pieces of information (one or more pieces of energy cost information and/or information except the one or more pieces of energy cost information), and the like. In this instance, the energy consumption may be energy consumption used two or more HANs, and may be simultaneously or selectively displayed.

The information on energy consumption may include information on past consumption, current consumption and estimated consumption in the future. The information on energy consumption may include information on accumulated consumption for a specific period (time), average consumption, increasing rate of consumption, decreasing rate of consumption, maximum consumption, minimum consumption, and the like.

The additional information may include one or more of environment information, time information, information related to the one or more components, information related to another component and information related to a user using the one or more components. The environment information may include one or more of information related to carbon dioxide emission rate, concentration of carbon dioxide in air, temperature, humidity, precipitation, presence of rainfall, amount of solar radiation, amount of wind.

In addition to the information described above, information refined based on at least one information or newly generated information may also be displayed in the display unit 31.

In a case where the specific component 30 is the energy storage component 13 or 23, the presence of use of the stored electricity, the remaining amount of the store electricity and the like may be displayed. If the remaining amount of the stored electricity is less than a predetermined value, alarm information may be displayed.

The information displayed in the display unit 31 may include one or more of information on number, character, sentence, figure, shape, symbol, image and light. The information displayed in the display unit 31 may include one or more of information on graph for each time or period, level, table. One or more of the shape, color, brightness, size, position, alarm period, alarm time of the information displayed in the display unit 31 may be varied.

A currently operable function (or menu) may be displayed in the display unit 31. Alternatively, among a plurality of functions, operable and inoperable function may be divided by size, color, position and the like, and then displayed in the display unit 31. Alternatively, in a case where separate input units are provided, only an input units for selecting an operable function may be activated, or an input unit for selecting an operable function and an input unit for selecting an inoperable function may be displayed in different colors.

The target or display method of information displayed in the display unit 31 may be set and changed by a user, or may be changed automatically.

In a case where a condition for informing the user of information is satisfied, specific information may be displayed in the display unit 31. It will be apparent that a portion of a plurality pieces of information may be continuously displayed in the state that a component is turned on. The display time of the information may be changed or set automatically or manually.

If specific information (one or more pieces of information) is selected using the input unit, the selected information may be displayed. If a user contacts a portion of a component, e.g., an input unit, a handle, a display or the like, regardless of information display selection, or operates one or more buttons or knobs that constitute the input unit, a portion of the information may be displayed. In this instance, the information to be displayed may be set or changed. It will be apparent that a sensing unit for sensing a user's contact may be provided to the component. Alternatively, the specific information may be displayed by installation environment or variation of outdoor environment. Alternatively, the specific information may be displayed when the specific component receives new information. Alternatively, the specific information may be displayed when the kind or state of the specific component is changed. As an example, if a light emitting unit is turned off in an off-peak section and an on-peak section comes, the light emitting unit may be turned on. Alternatively, the specific information may be automatically displayed when the operation or state of the component is changed. As an example, in a case where the mode of the component is changed, information related to the changed mode may be automatically displayed.

Meanwhile, the display unit 31 may be separably connected or fixed to the component 30. In a case where the display unit 31 is separable from the component 30, it may perform wired or wireless communication with the component 30 (or control unit of the component). In a case where the display unit 31 is fixed to the component 30, it may also perform wired or wireless communication with the component 30.

In a case where the display unit 31 is separable from the component 30, a communication unit and an input unit for inputting or selecting information may be provided to the display unit 31. Thus, information can be inputted or selected through the input unit in the state that the display unit 31 is separated from the component 30. The communication unit may be provided to the component 30, and only the display unit 31 may be separated from the component 30. The display unit 31 may be the energy management component 24, the energy metering component 25 or the central management component 27, or may be a separate control apparatus.

In a case where the display unit 31 is provided with a communication unit, a communication unit may also provided to the component 30. In a case where the display unit 31 and the component 30 are in the state that they are communicated with each other and information is transmitted/receive through a communication signal, the display unit 31 may be used. That is, in a case where the intensity of a signal is secured so that information can be included in the communication signal, the display unit 31 may be in an available state. On the other hand, in a case where the display unit 31 is not communicated with the component 30 or information is not included in the communication signal due to the weak intensity of the signal, the display unit may be in an unavailable state. One of the display unit 31 and the component 30 transmits a communication signal, and the other of the display unit 31 and the component 30 transmits a response signal. The presence of use of the display unit 31 may be determined by the presence of reception of the communication and response signals and the signal intensity. That is, in a case where any one of the display unit 31 and the component 30 does not receive a signal or the intensity of received signal is less than a reference intensity, it may be determined that the display unit 31 is unavailable. Any one of the display unit 31 and the component 30 may increase the intensity of a transmission signal until it receives a response signal of which intensity is more than the reference intensity.

Information for informing the user of the presence of use of the display unit 31 may be displayed in the display unit 31 or the component 30. If it is recognized that the display unit 31 is unavailable, the component 30 may be controlled to increase its unique performance, to perform a door locking function or to limit its operation. Alternatively, the power of the component may be off while maintaining the power of a communication apparatus (modem) required to perform communication in the network system. Alternatively, the power of the component may be off while maintaining only a memory function for storing the state information of the component.

Meanwhile, sensors may be provided to the respective display unit 31 and component 30 so as to sense the presence of mounting of the display unit 31. As an example, the presence of mounting of the display unit 31 may be determined when the component 30 is operated. Each of the sensors may be a vibration sensor for sensing vibration. If the display unit 31 is mounted on the component 30, vibration generated in the operation of the component 30 can be transferred to the display unit 31. Therefore, in a case where the difference between the values of vibrations respectively sensed by the sensors is less than a predetermined value, it may be recognized that the display unit 31 is mounted on the component 30. If it is recognized that the display unit 31 is mounted on the component 30, the operation of the component 30 may be controlled so that vibration or noise generated in the operation of the component 30 is decreased. As an example, in a case where the component 30 is a washing machine or drier, the rotation speed of a motor may be decreased. In a case where the component 30 is a refrigerator, the driving period of a compressor may be decreased. On the contrary, if it is recognized that the display unit 31 is separated from the component 30, the component may be controlled to increase its unique performance, to perform a door locking function or to limit its operation.

As another example, each of the sensor may be a temperature sensor. In a case where the difference between the values of temperatures respectively sensed by the sensors is less than a predetermined value, it may be recognized that the display unit 31 is mounted on the component 30.

In the state that the display unit 31 is separated from the component 30, an auxiliary display unit may be provided to the component 30 so as to enable the operation of the component 30. The presence of operation of the auxiliary display unit may be determined based on the presence of use of the display unit 31. As an example, if the display unit 31 is separated from the component 30 or is unavailable, the auxiliary display unit may be turned on.

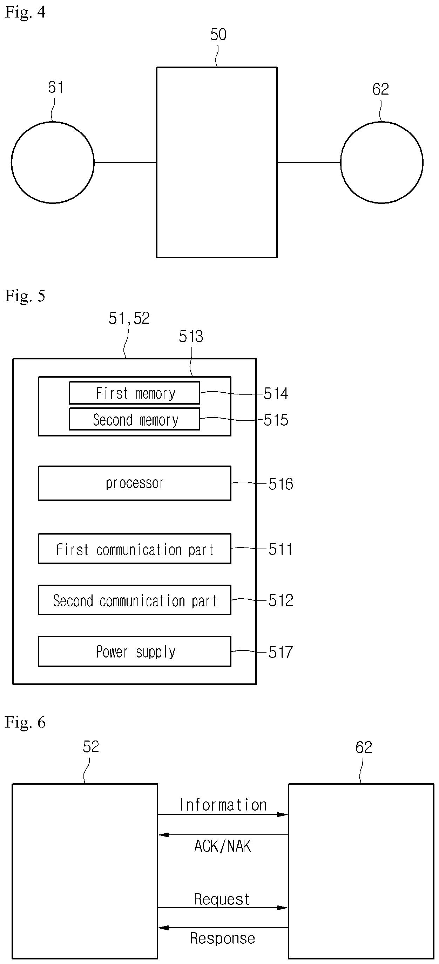

Fig. 4 is a view showing the communication structure of two components that constitute the network system according to a first embodiment. Fig. 5 is a block diagram showing the detailed configuration of a communication device that constitutes a communication unit.

Referring to Figs. 2, 4 and 5, first and second component 61 and 62 that constitute the network system may perform wired or wireless communication by means of a communication unit 50. The first and second components 61 and 62 may perform unidirectional or bidirectional communication.

In a case where the two components 61 and 62 perform wired communication, the communication unit 50 may be a simple communication line or power line communication means. It will be apparent that the power line communication means may include communicators (e.g., a modem or the like) respectively connected to the two components.

In a case where the two components 61 and 62 perform wireless communication, the communication unit 50 may include a first communicator 51 connected to the first component 61 and a second communicator 52 connected to the second component 62. In this case, the first and second communicators 51 and 52 perform wireless communication with each other.

As an example, if any one of the first and second communicators is powered on, one of the two communicators may transmit a network participation request signal, and the other of the two communicators may transmit a permission signal. As another example, if any one of the first and second communicators is powered on, the powered-on communicator may transmit a network participation request signal to a communicator previously participated in the network, and the communicator that receives the request signal may transmit a permission signal to the powered-on communicator.

In a case where a communicator that recognizes energy information determines that an error occurs in the received information in the state that a specific component participates in the network, the information is re-requested. For example, in a case where the first communicator receives energy information from the second communicator but an error occurs in the received information, the first communicator may request the second communicator to re-transmit the energy information. If the first communicator does not receive normal information for a predetermined time or number of times, it is determined that the first communicator has an error. In this case, information for informing a user of the error may be displayed in the first communicator or the first component 61.

The first component 61 may be a component that constitutes the UAN 10 or a component that constitutes the HAN 20.

The second component 62 may be a component that constitutes the UAN 10 or a component that constitutes the HAN 20.

The first and second components 61 and 62 may be the same kind of component or different kinds of components.

Components may be joined in the UAN 10 or the HAN 20.

Specifically, addresses may be assigned to a plurality of components, e.g., first and second components, respectively. Here, the addresses are necessary for performing communication between the components and can be mapped to at least a group.

The address may be understood as values respectively converted from the unique code of the first or second component. That is, at least a portion of the components that constitute the network system may have an unchangeable/unique code, and the code may be converted into an address for building a network.

In other words, product codes for at least some of the plurality of components capable of constituting first and second networks may be converted into different network codes based on the constituted networks.

As an example, the product code may be a unique code determined in production of electric appliances or a code separately provided for the registration of a network. The product code may be converted into an identity (ID) for identifying a network to which the electric appliance is to be registered.

The first and second networks may be networks that constitute the UAN 10 or networks that constitute the HAN 20. On the other hand, the first and second networks may be the UAN 10 and the HAN 20, respectively. Alternatively, the first and second networks may be the HAN 20 and the UAN 10, respectively.

A first component and a second component for allowing the first component to participate in the network may be included in the plurality of components that constitute the network. For example, the first component may be an electric appliance and the second component may be a server.

Any one of the first and second components transmits a request signal for participating in the network, and the other of the first and second components may transmit a permission signal.

That is, a signal may be transmitted/received between the first and second components, and whether or not to participate in the network may be determined based on the transmission time or number of the signal.

As an example, the first component transmits a test signal to the second component, and it is determined whether or not a response signal from the second component is transmitted to the first component. In a case where the response signal is not transmitted, the first component re-transmits the test signal, and it is re-determined whether or not a response signal from the second component is transmitted to the first component. By repeating such a process, if the transmission number of the test signal exceeds the setting number of the test signal, it may be determined that the second component does not participate in the network.

Meanwhile, the first component may transmit the test signal to the second component. If a response signal from the second component is not transmitted within a setup time, it may be determined that the second component does not participate in the network.

The first and second communicators 51 and 52 may have the same structure. Hereinafter, the first and second communicators 51 and 52 will be referred to as a communicator 51 and 52.

The communicator 51 and 52 may include a first communication part 511 for communication with the first component 61, a second communication part 512 for communication with the second component 62, a memory 513 for storing information received from the first component 61 and information received from the second component 62, a processor 516 for performing information processing, and a power supply 517 for supplying power to the communicator 51 and 52.

Specifically, the communication language (or scheme) of the first communication part 511 may be identical to or different from that of the second communication part 512.

Two kinds of information respectively received from the two components may be stored in the memory 513. The two kinds of information may be stored in a single sector or may be respectively stored in sectors. In any case, an area in which the information received from the first component 61 may be referred to as a first memory 514, and an area in which the information received from the second component 62 may be referred to as a second memory 515.

The processor 516 may generate first information or generate second and third information based on information received from the component or another communicator.

As an example, in a case where the communicator 51 and 52 receives the first information, it may generate information or sequentially generate the information and the second information by processing a data. Alternatively, in a case where the communicator 51 and 52 receives the first information, it may generate the second and third information by processing a data. In a case where the communicator 51 and 52 receives the third information, it may new third information.

For example, in a case where the second component is an energy consumption component (electric home appliance, component that constitutes the electric home appliance, or the like), the second communicator may generate a command for reducing energy consumption. In a case where the second component is an energy generation component, energy distribution component or energy storage component, the second communicator 52 may generate a command for energy generation time, generation amount, energy distribution time, distribution amount, energy storage time, storage amount or the like. In this case, the second communicator 52 serves as an energy management component.

The power supply 517 may receive electricity supplied from the components 61 and 62 or may receive electricity supplied from a separate power source. Alternatively, the power supply 517 may be a battery or the like.

Fig. 6 is a view showing a communication performing process between a specific component and a communication device according to the first embodiment.

Hereinafter, for convenience of illustration, a communication performing process between the second component 62 and the second communicator 52 will be described as an example. A communication performing process between the first component 61 and the first communicator 51 may be identically applied to that between the second component 62 and the second communicator 62.

Referring to Figs. 5 and 6, the second communicator 52 receives a message from the first communicator 51. The second communicator 52 may receive a message in real time or by periods without transmitting a request for the message to the first communicator 51, or may receive a message as a response for the request for the message to the first communicator 51. Alternatively, the second communicator 52 may receive a message by requesting information to the first communicator 51 at a point of time when it is initially turned on. Then, the second communicator 52 may receive information in real time or by periods from the first communicator 51 without a request for information.

The information received from the first communicator 51 is stored in the memory 513. The second communicator 52 transmits a message to the second component 62 as a response for the message. In this instance, the message transmitted to the second component 62 relates to new information different from the information previously stored in the memory 513, or information generated in the processor 516.

Then, the second component 62 transmits an acknowledge character (ack) or negative acknowledge character (Nak) to the second communicator 52 as a response for the message. The second component 62 performs a function (generation of a command, operation, or the like) based on the received information, or waits for performing the function.

Meanwhile, the second communicator 52 requests component information to the second component 62 in real time or by periods. As an example, the component information may be component state information or information on a component unique code, a manufacturer, a service name code, an electricity use amount, and the like. Then, the second component 62 transmits component information to the second communicator 52 as a response for the request. The component information is stored in the memory 513 of the second communicator 52.

If the second communicator 52 receives a message for requesting the component information from the first communicator 51, it transmits the component information stored in the memory 513 to the first communicator 51 as a response for the message. Alternatively, the second communicator 52 transmits the component information stored in the memory 513 to the first communicator 51 in real time or by periods.

The second communicator 52 may transmit the information of the first component, stored in the memory, to the first component together with the information received from the first component. Alternatively, the second communicator 52 may transmit the information of the first component, stored in the memory, to the first component, separately from transmitting the information received from the first component.

The second communicator 52 stores the information of the second component 62 in the memory 513. Hence, in a case where the second communicator 52 receives a message for requesting the component information from the first communicator 51, it transmits the component information stored in the memory 513 directly to the first communicator 51 without a request for information to the second component 62, and thus, the communication load of the second component 62 can be reduced. That is, the second component becomes a virtual component.

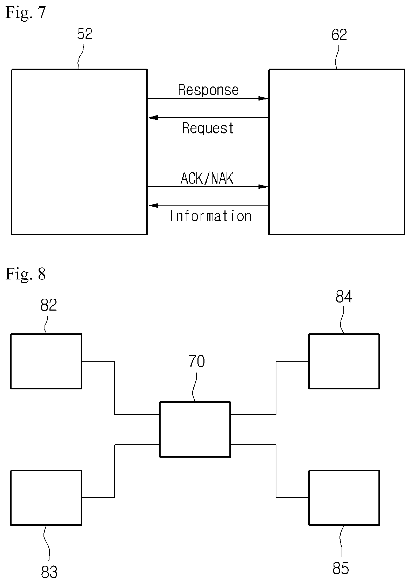

Fig. 7 is a view showing a communication performing process between a specific component and a communication device according to a second embodiment.

Hereinafter, for convenience of illustration, a communication performing process between the second component 62 and the second communicator 52 will be described as an example. A communication performing process between the first component 61 and the first communicator 51 may be identically applied to that between the second component 62 and the second communicator 62.

Referring to Figs. 5 and 7, the second communicator 52 receives a message from the first communicator 51. The second communicator 52 may receive a message in real time or by periods without transmitting a request for the message to the first communicator 51, or may receive a message as a response for the request for the message to the first communicator 51. Alternatively, the second communicator 52 may receive a message by requesting information to the first communicator 51 at a point of time when it is initially turned on. Then, the second communicator 52 may receive information in real time or by periods from the first communicator 51 without a request for information.

If the second communicator 52 receives a message for requesting information from the second component 62, it transmits a message to the second component 62 as a response for the message for requesting the information. In this instance, the message transmitted to the second component 62 relates to new information different from the information previously stored in the memory 513, or information generated in the processor 516. Alternatively, the information transmitted to the second component 62 may be information received from the first component.

The second component 62 performs a function based on the received information or waits for performing the function.

Meanwhile, the second component 62 transmits component information to the second component 62 in real time or by periods. As an example, the component information may be component state information or information on a component unique code, a manufacturer, a service name code, an electricity use amount, and the like.

As described above, the electric use amount may be detected by the smart meter. In a case where the electricity use amount is included in the information of the second component 62, the correction of an actual electricity use amount may be performed by comparing the information of the second component 62 with the information of the smart meter.

Then, the second communicator 52 stores the information of the second component 62 in the memory 513, and transmits an acknowledge character (ack) or negative acknowledge character (Nak) to the second component 62 as a response for the message.

If the second communicator 52 receives a message for requesting component information from the first communicator 51, it transmits the information of the second component 62, stored in the memory 513, to the first communicator 51 as a response for the message. Alternatively, the second communicator 52 the information of the second component 62, stored in the memory 513, to the first communicator 51 in real time or by periods.

The second communicator 52 stores the information of the second component 62 in the memory 513. Hence, in a case where the second communicator 52 receives the message for requesting the component information from the first communicator 51, it transmits the information stored in the memory 513 directly to the first communicator 51 without transmitting a request for information to the second component 62, and thus, the communication load of the second component 62 can be reduced. That is, the second communicator 52 becomes a virtual component.

### <Applications>

In the following descriptions, the first and second components may be reversed to each other, and therefore, overlapping descriptions will be omitted. For example, in a case where the first component is an electric home appliance and the second component is an energy management component, description in a case where the first component is an energy management component and the second component is an electric home appliance will be omitted.

Information transmitted/received by each of the components may be all the information described above. Particularly, specific information may be transmitted/received for each of the components.

The energy generation components 11 and 21 may transmit/receive information related to energy generation amount, and the like. The energy distribution components 12 and 22 may transmit/receive information related to energy distribution amount, distribution time, and the like. The energy storage components 13 and 23 may transmit/receive information related to energy storage amount, storage time, and the like. The energy metering components 15 and 25 may transmit/receive information related to energy consumption amount, and the like. The energy management components 14 and 24 may transmit/receive information related to energy generation, distribution, storage, consumption, cost, reliability, emergency situation, and the like.

### (1) Case where second component is one component of HAN

The second component 62 may be an energy consumption component 26, e.g., a heater, motor, compressor, display or the like. In this case, the first component 61 may be a MICOM or energy consumption component 26 as an example. The MICOM or energy consumption component 26 may transmit a message for reducing energy consumption to another energy consumption component 26. Then, the another energy consumption component 26 may perform an operation for reducing energy, for example.

As another example, the energy consumption component 26 may be an electric home appliance. In this case, the first component 61 may be an energy storage component 23, an energy consumption component 26 (electric home appliance), an energy management component 24, an energy metering component 25, a central management component 27, a web server component 28, or a component that constitutes the UAN 10.

In this instance, an energy management function may be included or not included in the first component 61 except the energy management component 24.

In a case where an energy management function or solution is not included in the first component 61, it may be included in the communication unit or may be included in the MICOM of the second component 62. In this case, the energy management function is related to the consumption of energy.

As still another example, the second component 62 may be an energy generation component 21, an energy distribution component 22 or an energy storage component 23. In this case, the first component 61 may be an energy management component 24, a central management component 27, a web server component 28 or a component that constitutes the UAN 10.

A message may be transmitted to the second component 62. Here, the message may include energy generation time, generation amount or the like, energy distribution time, distribution amount or the like, and energy storage time, storage amount or the like.

In this instance, an energy management function may be included or not included in the first component 61 except the energy management component 24.

In a case where an energy management function or solution is not included in the first component 61, it may be included in the communication unit. In this case, the energy management function is related to the generation, distribution and storage of energy.

As still another example, the second component may be an energy metering component 25. In this case, the first component 61 may be a central management component 27, a web server component 28 or a component that constitutes the UAN 10.

An energy management function may be included or not included in the energy metering component. In a case where the energy management function is included in the energy metering component 25, the energy metering component 25 performs the same operation as the EMS.

In a case where an energy management function or solution is included in the energy metering component 25, it may be included in the communication unit or may be included in the second component 62.

As still another example, the second component 62 may be a central management component 27. In this case, the first component 61 may be a web server component 28 or a component that constitutes the UAN 10.

### (2) Case where second component is one component of UAN

The first component 61 may be a component that constitutes the UAN 10. In this case, the first and second components 61 and 62 may be the same kind of component or different kinds of components.

An energy management function may be included in the first component 61, the second component 62 or the communication unit.

The energy management function included in a specific component or the energy management function included in the energy management component 14 may be related to generation amount, distribution amount, storage amount, energy use amount of a component that constitutes the HAN 20.

In this specification, an example capable of constituting the network system has been described. However, any component not mentioned in this specification may be a first or second component that performs communication through the communication unit. For example, an automobile may be a second component, and the energy management component 24 may be a first component.

### (3) Case where one of first and second components communicates with third component

Although the communication between two components has been described in the aforementioned examples, each of the first and second components may perform communication with one or more components (a third component to an n-th component).

In this case, the relation of the first or second component that performs communication with the third component and the like may be one of the aforementioned examples.

For example, the first component may be a component that constitutes the UAN, the second component may be an energy management component 24 that communicates with the first component, and the third component may be an energy consumption component 26 that communicates with the second component. In this instance, one or more of the three components may communicate with another component.

In this specification, the first to n-th components may be components that constitute the UAN or components that constitute the HAN. Alternatively, a portion of the components may be components that constitute the UAN, or another portion of the components may be components that constitute the HAN.

Hereinafter, third and fourth embodiments will be described. A difference between these embodiments and the aforementioned embodiments will be mainly described, and descriptions and reference numerals will be quoted to elements of these embodiments identical to those of the aforementioned embodiments.

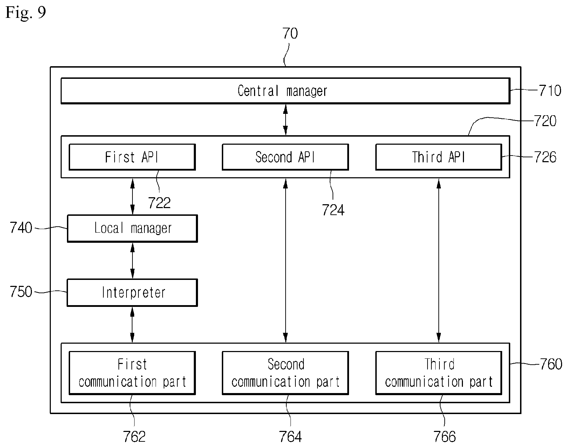

Fig. 8 is a view showing the communication structure of components that constitute the network system according to a third embodiment. Fig. 9 is a block diagram showing the detailed configuration of a first component in Fig. 8.

Referring to Figs. 8 and 9, a first component 70 may communicate with second to fifth components 82, 83, 84 and 85. Hereinafter, it will be described as an example that the first component 70 is a central management component (home server), the second and third components 82 and 83 are energy consumption components (electric home appliances), the fourth component 84 is an energy metering component (smart meter), and the fifth component 85 is a component that constitutes the UAN. The components may communicate with each other by means of a communication unit. In the network system illustrated in Fig. 8, each of the components is directly connected to the first component 70 to communicate with the first component 70. However, in a case where each of the components 82, 83, 84 and 85 is connected to new components to communicate with the new components, the network system may be extended and operated by the new components.

The second and third components 82 and 83 may be the same kind of component or different kinds of components. In this embodiment, it will be described as an example that the second and third components 82 and 83 are different kinds of energy consumption components.

The first component 70 may simply transmit information received from the fourth component 84 and/or the fifth component 85 to the second component 82 and/or the third component 83, or may process the received information and transmit the processed information.

The first component 70 may simply transmit information received from the second component 82 and/or the third component 83 to the fourth component 84 and/or the fifth component 85 (a signal may be converted), or may process the received information and transmit the processed information (the information is converted.

The first component 70 includes a communication unit 760 for performing communication with another component, a central manager 710 for managing the entire operation and/or information processing of the first component, and an application programming interface 720 (hereinafter, referred to as an 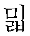 PI? for performing an interface between the communication unit 760 and the central manager 710 (specifically, application software).

The communication unit 760 includes a first communication part 762 for performing communication with the second and third components 82 and 83, a second communication part 764 for performing communication with the fourth component 84, and a third communication part 766 for performing communication with the fifth component 85.

In this instance, the first and second communication parts 762 and 764 may use different communication protocols from each other. As an example, the first communication part 762 may use Zigbee and the second communication part 764 may use Wi-fi. In this embodiment, the kind of communication protocol or method used by the first and second communication parts 762 and 764 is not limited. The third communication component 766 may use Internet communication as an example.

The API 720 includes a first API 722, a second API 724 and a third API 726. The third API 726 is an interface between the central manager 710 and the third communication part 766, and the first API 722 is an interface between the first communication part 762 and the central manager 710. The second API 724 is an interface between the second communication part 762 and the central manager 710.

The first component 70 further includes a local manager 740 and an interpreter 750. In a case where the information to be transmitted/received between the API 720 and the communication unit 760 is information related to operations of energy consumption components (electric home appliances), the local manager 740 outputs information corresponding to the respective energy consumption components. The interpreter 750 interprets information transmitted from the local manager 740 to the communication unit 760 or information received in the communication unit 760. The information outputted from the interpreter 750 is used to set or get values of information related to the respective energy consumption components.

The local manager 740 includes a memory (not shown) in which information related to one or more energy consumption components is stored. Alternatively, the local manager 740 may be connected to a memory in which information related to one or more energy consumption components is stored. The information related to each of the energy consumption components may include operation information of each of the energy consumption components and information for controlling the energy consumption components. The information related to each of the energy consumption components may further include software download information for operating each of the energy consumption components and information for remote controlling/monitoring.

As an example, in a case where a plurality of energy consumption components include a washing machine, a refrigerator and a cooking appliance, information related to each of the energy consumption components is stored in the memory. The information related to each of the energy consumption components may be changed as components connected to the network system are changed.

If a signal is transmitted from the API 720 to the local manager 740, information corresponding to a specific energy consumption component is outputted. In a case where a plurality of energy consumption components exist, information on the plurality of energy consumption components is outputted. The interpreter 750 interprets the information transmitted from the local manager 740 into a machine language so as to transmit the information to the energy consumption components. The machine language may be a signal used to set or get the operation information of the energy consumption components.

The information transmission process in the first component 70 will be described.

As an example, the first component 70 may receive energy information (e.g., an energy reduction signal: first command) from the forth component 45 through the second communication part 764. The received energy information is transmitted to the central manager 710 through the second API 724. In the process of information transmission between the second API 724 and the central manager 710, only a signal including the information is converted, and the content of the information is not converted.

Since the energy information is information related to the energy consumption reduction of the energy consumption components, the central manager 710 transmits information (second command) related to operations of the energy consumption components to the API 720. As an example, the central manager 710 transmits information necessary for turning off power of the washing machine or refrigerator.

Then, the information is transmitted from the first API 722 to the local manager 740.

The local manager 740 transmits information (third command) for controlling the operation of each of the energy consumption components to the interpreter 750 based on the information transmitted from the first API 722. As an example, in a case where the information transmitted from the first API 722 is information having different kinds of energy consumption components as targets, the local manager 740 transmits information related to the control of each of the energy consumption components to the interpreter 750. In this case, since the local manager 740 receives the second command and outputs the third command, the information inputted to the local manager 740 is converted and outputted by the local manager 740.

Subsequently, the interpreter 750 interprets the information transmitted from the local manager 740 into a machine language (signal). Then, the converted signal is transmitted to the target energy consumption components (second and third components) through the first communication part 762. Then, the energy consumption components (second and third components) are finally turned off so as to reduce energy.

Although it has been described above that the first component receives information through the second communication part, the first component may receive information through the third component so that the information related to the energy consumption components is outputted.

Meanwhile, the second and third components 82 and 83 may transmit their own operation information to the first component 70. Since the information transmitted from the second and third components 82 and 83 is information related to operations of the energy consumption components, the signal received in the first communication part 762 is transmitted to the central manager 710 via the interpreter 750, the local manager 760 and the first API 722. In such an information transmission process, the information related to the second and third components 82 and 83 is stored in the local manager 740. In this embodiment, since the information related to the energy consumption components is stored in the local manager, the local manager may be understood as a virtual energy consumption component (abstraction model).

The central manager 710 may transmit the received information to the second communication part 764 and/or the third communication part 766.

The operation of the first component will be described. The information received through the communication unit 760 may be transmitted directly to the API 720, or may be converted (via the interpreter and the local manager) and then transmitted to the API 720, based on the kind of information (or the type of signal).

The information transmitted from the central manager 740 may be transmitted directly to the communication unit 760, or may be converted and then transmitted to the communication unit 760.

As another example, the interpreter may be included in the local manager 740, and the information received through the communication unit 760 is transmitted to the local manager 740. However, converted information may be outputted, or information may be outputted as it is without converting the information.

Meanwhile, in a case where the information transmitted to the API 720 through the second or third communication part 764 or 766 is information (raw data or refined data) related to time-based pricing, the central manager 710 determines the presence of on-peak time. In the case of the on-peak time, the central manager 710 may transmit the information (first command) for controlling the operations of the energy consumption components to the API 720. Then, the information is converted through the local manager 740, and the converted information (second command) is transmitted to the energy consumption components through the first communication part 762. Alternatively, the central manager 710 may transmit the information related to the time-based pricing to the first communication part 762 through the second API 724 without determining the presence of on-peak time. In this case, the information may be converted or not converted. That is, in a case where the central manager directly receives first information (raw data), it may transmit the first information as it is, or convert the first information into a second information (refined data) and then transmit the second information.

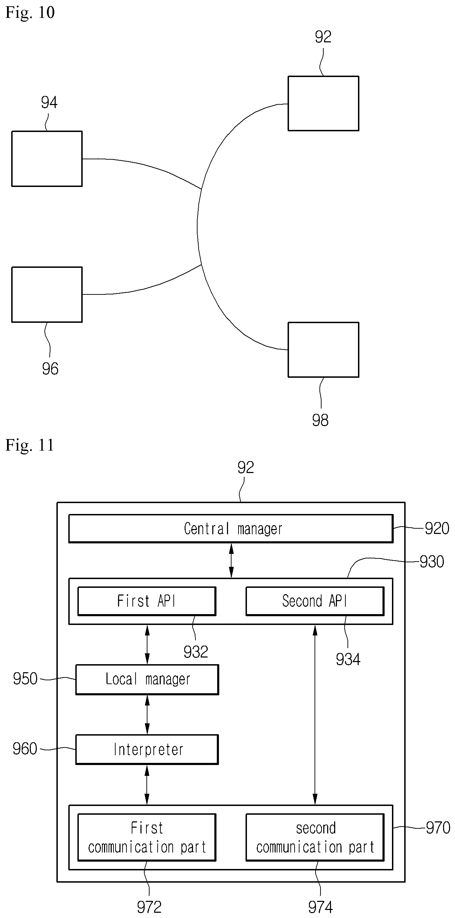

Fig. 10 is a view showing the communication structure of components that constitute the network system according to a fourth embodiment. Fig. 11 is a block diagram showing the detailed configuration of a first component in Fig. 10.

Referring to Figs. 10 and 11, the network system of this embodiment may include at least first to fourth components 92, 94, 96 and 98.

The first component 92 may communicate with the second to fourth components 94, 96 and 98. The fourth component 98 may communicate with the first to third components 92, 94 and 96.

Hereinafter, it will be described as an example that the first component 92 is a central management component (home server), the second and third components 94 and 96 are energy consumption components (electric home appliances), and the fourth component 98 is an energy metering component (smart meter).

The central management component (home server) may be understood as a component necessary for controlling at least a component that constitutes the HAN 20.

The first component 92 includes a communication unit 970 for performing communication with another component, a central manager 920 for managing the entire operation and/or information transmission/reception of the first component 92, and an application programming interface 930 (hereinafter, referred to as an "API") that serves as an interface between the communication unit 970 and the central manager 920 (specifically, application software).

The communication unit 970 may include a first communication component 972 for performing communication with the second to fourth components 94, 96 and 98, and a second communication component 974 for performing Internet communication.

The API 930 includes a first API 932 and a second API 934. The second API 934 is an interface between the central manager 920 and the second communication part 974, and the first API 930 is an interface between the first communication part 972 and the central manager 920.

The first component 92 further includes a local manager 950 and an interpreter 960. In a case where the information to be transmitted/received between the API 932 and the communication unit 970 is information related to operations of energy consumption components (electric home appliances), the local manager 950 outputs information corresponding to the respective energy consumption components. The interpreter 960 interprets information transmitted from the local manager 950 to the communication unit 970 or information received in the communication unit 970.

In this embodiment, the functions of the interpreter and the local manager are identical to those of the third embodiment, and therefore, their detailed descriptions will be omitted.

The information transmission process in the first component 92 will be described.

As an example, the first component 92 may receive energy information (e.g., energy reduction signal) from the fourth component 98 through the first communication part 972. Alternatively, the first component 92 may receive energy information from an external component connected to Internet through the second communication part 974.

The received energy information is transmitted directly to the first or second API 932 or 934 and then transmitted to the central manager 920. Since the energy information is information related to the energy consumption reduction of the energy consumption components, the central manager 920 transmits information related to the operations of the energy consumption components to the first API 932. As an example, the central manager 920 transmits information necessary for turning off power of a washing machine or refrigerator.

Then, the information is transmitted from the first API 932 to the local manager 950.

The local manager 950 transmits information for controlling the operation of each of the energy consumption components to the interpreter 960 based on the information transmitted from the first API 932. As an example, in a case where the information transmitted from the first API is information related to different kinds of energy consumption components, the local manager 950 transmits information related to the control of each of the energy consumption components to the interpreter 960.

Subsequently, the interpreter 960 interprets the information transmitted from the local manager 960 into a machine language (signal). Then, the interpreted signal is transmitted to the energy consumption components through the first communication part 972. Then, the energy consumption components are finally turned off so as to reduce energy.

Meanwhile, the second and third components 94 and 96 may transmit their own operation information to the first component 92. Since the information transmitted from the second and third components is information related to the operations of the energy consumption components, the signal received in the first communication part 972 is transmitted to the central manager 920 via the interpreter 960, the local manager 950 and the first API 932. In such an information transmission process, the information related to the first and second components is stored in the local manager 950.

The central manager 920 may transmit the received information to the first communication part 972. Then, the information of the second and third components 94 and 96 is transmitted to the fourth component 98.

The operation of the first component will be described. The information received through the communication unit 970 may be transmitted directly to the API 930, or may be converted (via the interpreter and the local manager) and then transmitted to the API 930, based on the kind of information (or the type of signal).

On the contrary, the information transmitted from the central manager 920 may be transmitted directly to the communication unit 970, or may be converted and then transmitted to the communication unit 970.

Meanwhile, in a case where the information transmitted to the API 930 through the second communication part 974 is information related to time-based pricing, the central manager 920 determines the presence of on-peak time. In the case of the on-peak time, the central manager 920 may transmit the information for controlling the operations of the energy consumption components to the API 930. Then, the information is transmitted to the energy consumption components through the local manager, the interpreter and the first communication part. In this case, the first component may be understood as an energy management component.

Although it has been described above that two energy consumption components communicate with the first component, the number of energy consumption components that communicate with the first component is not limited.

Although it has been described as an example that the first component is a home server, the first component may be an energy management component. In this case, the fourth component may be a central management component, an energy management component, a smart meter, or the like.

As another example, the first component may be a smart meter. In this case, the fourth component may be a central management component, an energy management component, or the like.

As still another example, the first component may be a terminal component (e.g., a gate way).

As still another example, each of the second and third components may be an energy generation component, an energy storage component or the like, which constitutes the HAN. That is, one or more of the energy generation component, the energy consumption component and the energy storage component may communicate with the first component. In addition to information related to the energy consumption component, information related to the energy generation component (e.g., information related to the operation of the energy generation component) and information related to the energy storage component (e.g., information related to the operation of the energy storage component) may be stored in the memory included in a local network or connected to the local network.

Although it has been described above that the first component performs Internet communication, the Internet communication may not be performed.

Although it has been described in the first embodiment that a single local manager is provided, a plurality of local managers may be provided. As an example, a first local manager may process information on an electric home appliance such as a refrigerator or washing machine, and a second local manager may process information on a display product such as a television or monitor.

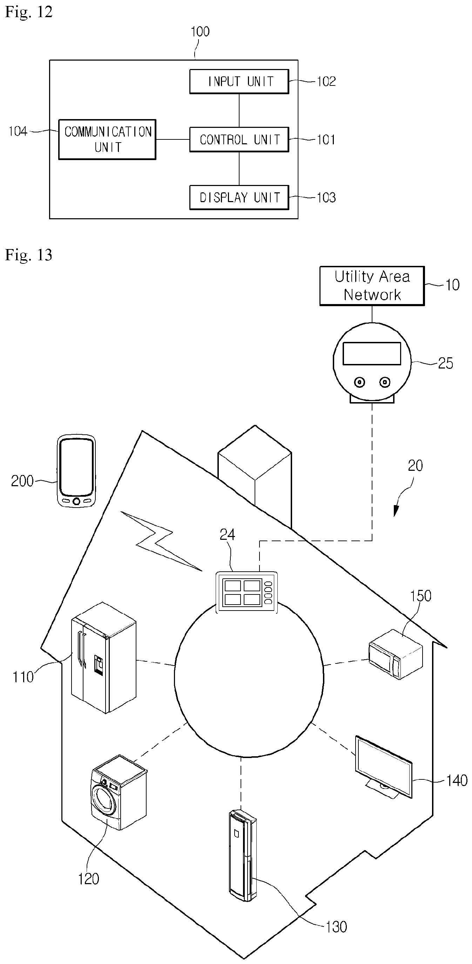

Fig. 12 is a block diagram illustrating an example of a component constituting a network system according to an embodiment. A component 100 described below may be one component of a utility area network or a home area network.

Referring to Fig. 12, the component 100 according to the current embodiment may include a control unit 101, an input unit 102 for inputting an operation command, and a display unit 103 for displaying information. Here, the input unit 102 may be provided in the display unit 103 in a touch screen method. Also, the control unit 110 may communicate with a communication unit 104.

The component 100 may further include a sensor, a driving unit, and a memory according to a kind thereof. Alternatively, the component 100 may not include the input unit 102 or the display unit 103 according to a kind thereof. The component 100 may be a function performance component or include a function performance component.

For example, when a start command is inputted by the input unit 102, optimum operation time information or information (an operation method) except a time of the component 100 is determined (determination of an optimum operation condition). The optimum operation time information or the information except the time may be determined to reduce an electricity charge or power consumption of the component 30. The optimal operation time information may be determined so that the component is immediately operated at the current time, the component is operated at a selected time, or the operation of the component is delayed. In a case where the optimal operation time is later than the time (the current time) recognized by a user, information for informing this fact to a user may be displayed on the display unit. An operation method or time may be inputted through the input unit 120 before the start command is inputted, and the inputted operation method or time may be changed or maintained by the determination of the optimum operation time information or the information except the time. That is, in a case where a specific operation condition is inputted through the input unit, when the operation condition of the component is determined on the basis of at least information related to energy charge, the component is operated under the determined optimum operation condition. Also, information changed from the inputted operation condition in the optimum operation condition or non-inputted information may be displayed on the display unit.

As another example, if at least one portion of a high price period is included in an operation time period of the component, the operation time period may be changed. Particularly, the operation time period may be defined by an operation start time and an operation finish time. The change of the operation time period refers to a change of at least one of the operation start time and the operation finish time. If the operation time period is changed, the component may not be operated in at least one portion of the high price period. As an example, if the high price information is recognized while the component is operated, the operation of the component may be immediately stopped. Alternatively, if the high price information is recognized while the component is operated, the operation of the component may be stopped after the component is operated for a predetermined time. If the high price period is finished, the component in a non-operation state may be re-operated. The operation time period may be changed entirely or partially. The finish time of the changed operation time period may be a time when the high price information is recognized or the prior time (the low price period prior to the high price period).

Alternatively, the finish time of the changed operation time period may be positioned at the low price period that comes after the high price period is finished. Alternatively, the start time of the changed operation time period may be positioned at the low price period that comes after the high price period is finished.

Fig. 13 is a schematic view illustrating an example of a network system according to an embodiment.

Referring to Fig. 13, the home area network 20 according to an embodiment may include an energy measurement component 25 for measuring a power (or supplied power) used in each home and/or an electricity charge in real time, a plurality of energy consumption component communicating with the energy measurement component 25, and an energy management component 24 for managing energy consumption of the plurality of energy consumption components.

Also, the energy measurement component 25 may communicate with the energy management component 24 and the utility area network 10. The energy measurement component 25 may receive energy information from the utility area network 10. The energy measurement component 25 may receive the energy information to simply transmit the received energy information into the energy management component 24 or may process the energy information to transmit the processed energy information.

For example, the plurality of energy consumption component may include a refrigerator 110, a washing machine and/or dryer 120, an air conditioner 130, a television 140, or a cooking appliance.

The energy management component 24 may receive operation information and/or state information of the plurality of energy consumption components and receive the energy information received from the energy measurement component 25 to control the plurality of energy consumption components.

The energy management component 24 may include a display unit for displaying information related to energy or information for controlling each of the energy consumption components. That is, an energy management screen for managing the energy consumption component may be displayed on the display unit of the energy management component 24. Here, a screen corresponding to each of the plurality of energy consumption components may be displayed on the display unit. Also, the energy management component 24 may further include a memory for storing various information.

The energy management component 24 may communicate with a mobile device 200 that is an example of an energy network auxiliary component 28. The mobile device 200 may receive the operation information and/or state information of the plurality of energy consumption components and the energy information (e.g., electricity charge information, a power usage information, high/low price period information, etc.) from the energy management component 24. Here, the electricity charge information may include an electricity charge to be supplied and an electricity charge used in the energy consumption component. Also, the mobile device 200 may control operations of the plurality of energy consumption components by communicating with the energy management component 24.

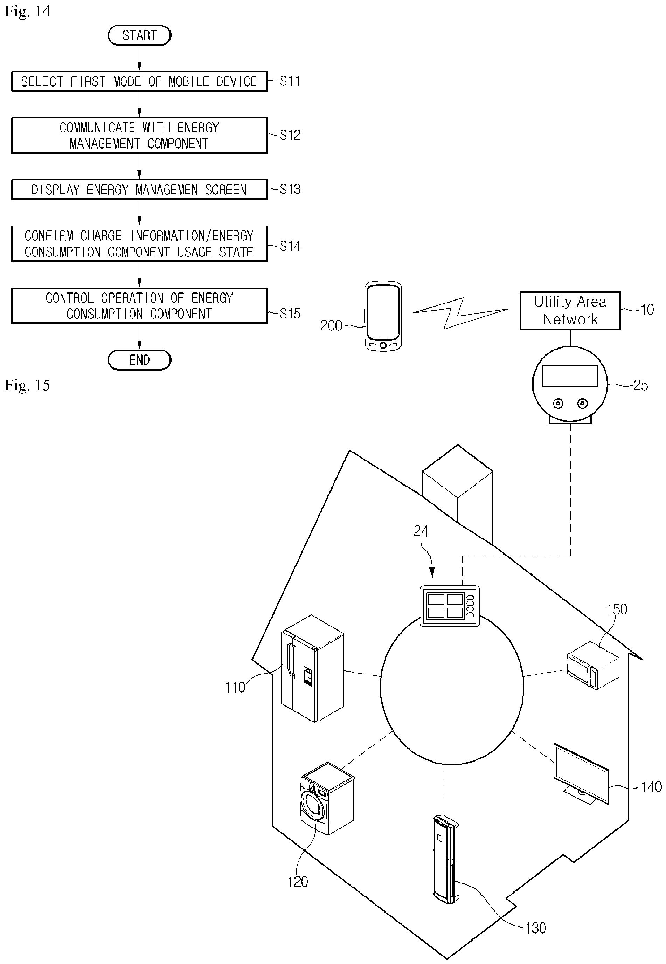

Fig. 14 is a flowchart for explaining a method of controlling the operation of the energy consumption component in the mobile device according to an embodiment.

Referring to Fig. 14, to control the energy consumption component in the mobile device 200, a management mode (hereinafter, referred to as a first mode) for managing the energy consumption component is selected from operation modes included in the mobile device 200 (S11). Then, the mobile device 200 communicates with the energy management component 24 (S12).

When the mobile device 200 communicates with the energy management component 24, an energy management screen is displayed on the mobile device 200 (S13). Thus, the user may confirm the operation state or the electricity charge information of each of the energy consumption components through the energy management screen of the mobile device 200 (S14).

Also, a command for controlling an operation of the energy consumption component on the basis of the information confirmed on the energy management screen may be inputted. Then, the inputted command may be transmitted into the energy consumption component through the energy management component 24. Also, the energy consumption component is operated according to the command inputted in the mobile device 200 (S15).

According to the current embodiment, the electricity charge, the power usage amount, and the operation and state information of the energy consumption component may be confirmed through the mobile device. In addition, the operation of the energy consumption component may be controlled to effectively manage the energy consumption of the energy consumption component. Also, since the operation of the energy consumption component may be controlled through the mobile device at a remote area, user's convenience may be improved.

Although the energy management component 24 communicates with the mobile device 200 in the current embodiment, the present disclosure is not limited thereto. For example, the energy management component may not separately provided, but a central management component 27 may be provided to communicate with the mobile device 200. Here, a separate energy management function may be included in the central management component 27.

Another embodiment will be proposed.

A signal generation part for generating a predetermined signal in the mobile device may be provided to the energy consumption component, for example, an electrical appliance. When a communication unit for communicating with the mobile device, for example, a wire and radio communication unit (modem) is not provided in the electrical appliance, a predetermined signal (e.g., a voice signal, an electromagnetic wave, and the like) generated in the signal generation part may be transmitted into the mobile device. Here, a receiving part for receiving the predetermined signal may be provided in the mobile device. The signal generation part and the receiving part may be understood as a communication unit for communication between the electrical appliance and the mobile device.

The mobile device may transmit the signal received from the electrical appliance into one component constituting the utility area network or the home area network. When the wire and radio communication unit is provided in the electrical appliance, the electrical appliance may communicate with the mobile device.

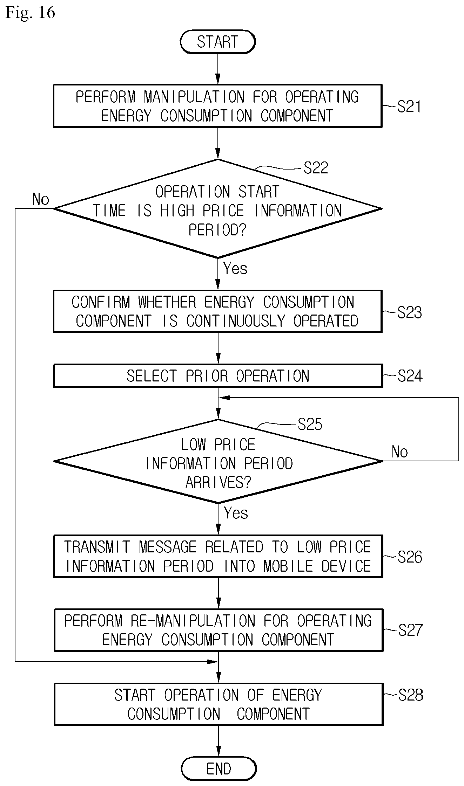

Fig. 15 is a schematic view illustrating another example of the network system according to an embodiment. Fig. 16 is a flowchart for explaining a method of controlling the network system according to configurations of Fig. 15.

Referring to Figs. 15 and 16, a mobile device 200 constituting a network system according to the current embodiment may communicate with a utility area network 10. The mobile device 200 may receive a message related to energy information and an operation time of an energy consumption component from the utility area network 10.

A manipulation command for operating the energy consumption component is inputted (S21). For example, the manipulation command may be inputted through an input unit provided in the energy consumption component or may be inputted through an input unit provided in the energy management component 24.

When the manipulation command is inputted, it is determined whether an operation start time (the current time) corresponds to a high price information period or a low price information period.

For example, it is determined whether the operation start time corresponds to an on-peak time period as the high price information period (S22). Since the energy consumption component may recognize the on-peak time period corresponding to the high price information period and an off-peak time period corresponding to the low price information period, it may be determined whether the operation start time corresponds to the on-peak time period. Alternatively, when the manipulation command is inputted through the input unit of the energy management component 24, the energy management component 24 may determine whether the operation start time corresponds to the on-peak time period.

If it is determined that the operation start time does not correspond to the on-peak time period (determined that the operation start time corresponds to the off-peak time period), the energy consumption component is operated according to the selected command (S28). On the other hand, when it is determined that the operation start time corresponds to the on-peak time period, a continuous progression confirmation message related to the operation of the energy consumption component may occur (S23). That is, a message for informing whether the energy consumption component is operated at the present time may occur. For example, the message may be displayed through a display unit of the energy consumption component or the energy management component 24.

When a user intends to operate the energy consumption component later (for example, the off-peak time period arrives), a further operation command may be inputted. That is, a reservation command may be inputted. When the further operation command is inputted (S24), the inputted command information is transmitted into the utility area network 10 via the energy management component and the energy measurement component.

The utility area network 10 (e.g., an energy supply source) receives the further operation command information to determine wither the current time corresponds to the off-peak time period. That is, it is determined whether the off-peak time period arrives (S25). When it is determined that the off-peak time period arrives, the utility area network 10 transmits a message for informing the arrival of the off-peak time into the mobile device 200. Here, the message may be transmitted into the mobile device 200 through the energy management component 25 or the energy management component 24.

As described above, since the message for informing the arrival of the off-peak time is transmitted into the mobile device 200 in the utility area network, the user may easily confirm the current time corresponds to the off-peak time. Thus, it may be determined whether the energy consumption component is operated now.

Also, when the input unit is manipulated again to operate the energy consumption component, the energy consumption component may be operated according to the prior selected command. Alternatively, a new operation command may be inputted while the user manipulates the input unit again. In this case, the energy consumption component may be operated according to the newly inputted command.

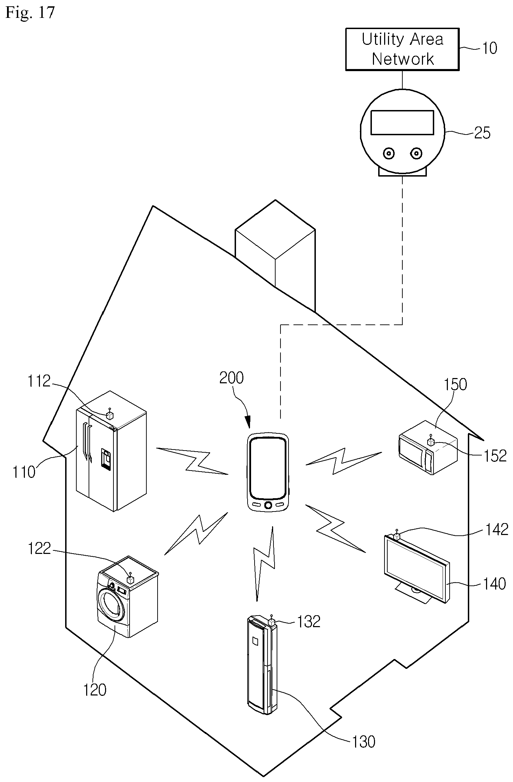

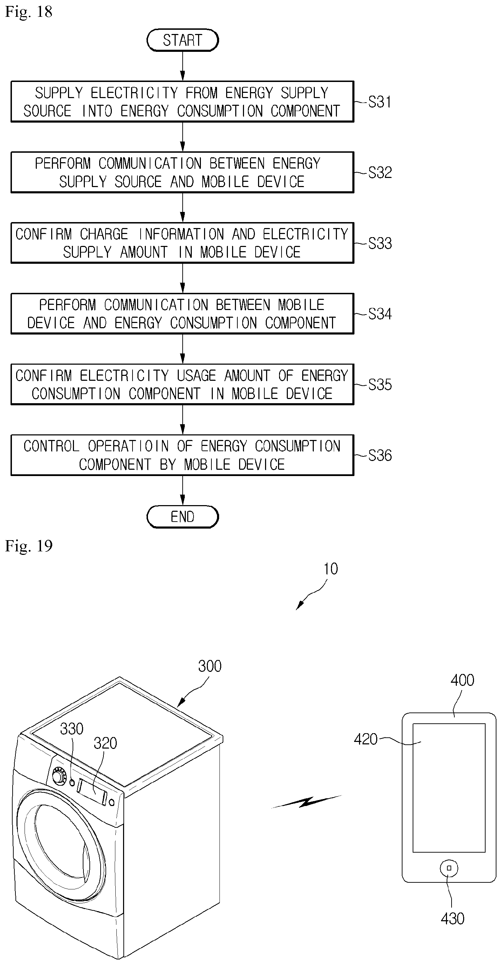

Fig. 17 is a schematic view illustrating another example of the network system according to an embodiment. Fig. 18 is a flowchart for explaining a method of controlling the network system according to configurations of Fig. 17.

Referring to Fig. 17, in a network system according to an embodiment, a mobile device 200 may directly communicate with energy consumption components 110, 120, 130, 140, and 150. Also, the mobile device 200 may communicate with an energy measurement component 25. The energy measurement component 25 may communicate with a utility area network 10. The energy consumption components include communication units 112, 122, 132, 142, and 152 for communicating with the mobile device 200, respectively.

A method of controlling the network system according to the current embodiment will be described with reference to Fig. 18. Each of the energy consumption components receives electricity from the utility area network 10 (i.e., an energy supply source) (S31). Here, each of the energy consumption components may be receive electricity generated in an energy generation component and/or electricity stored in an energy storage component.

Also, the mobile device 200 communicates with the energy supply source (S32). Although the mobile device 200 communicates with the energy supply source using the energy measurement component 25 as a medium in Fig. 17, the present disclosure is not limited thereto. For example, the mobile device 200 may directly communicate with the energy supply source.

As the mobile device 200 communicates with the energy supply source, the mobile device 200 may receive energy information (e.g., electricity charge information, electricity supply amount information, etc.) (S33).

Also, the mobile device 200 may communicate with the energy consumption component (S34). As the mobile device 200 communicates with the energy consumption component, the mobile device 200 may receive electricity usage amount of each of the energy consumption components (S35). Thus, the user may compare the electricity supply amount information received into the mobile device 200 to the electricity usage amount information. As occasion demands, a command for controlling an operation of the energy consumption component in the mobile device 200 may be inputted. Thus, the energy consumption component is operated on the basis of the operation command information transmitted from the mobile device 200 into the energy consumption component.

Another embodiment will be proposed.

When high price information in which energy information exceeds a predetermined reference is received into an energy consumption component, an energy measurement component, or an energy management component, the energy measurement component or the energy management component may transmit information or message for reducing an electricity amount (an electricity usage amount) of the energy consumption component into a mobile device. The mobile device may control an operation of the energy consumption component according to the information or message.

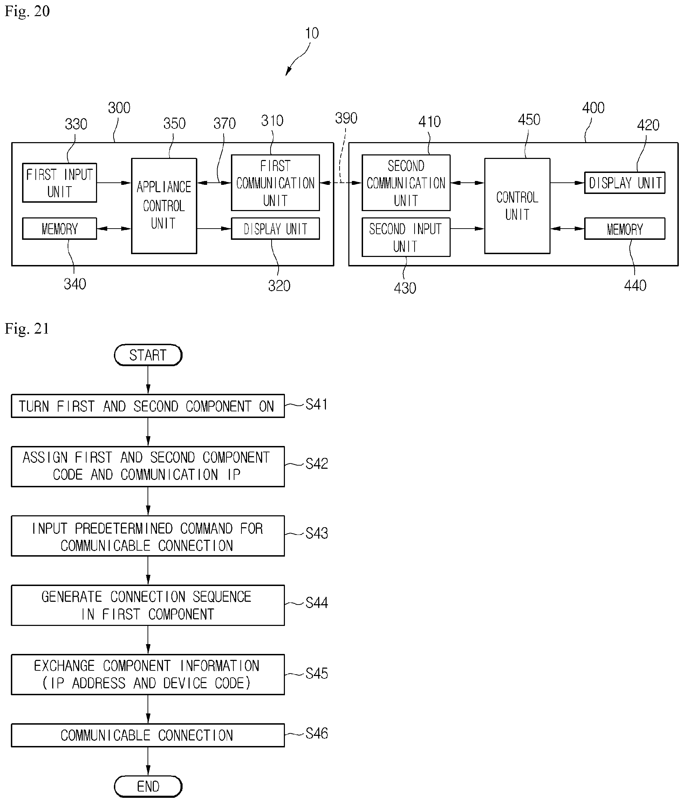

Fig. 19 is a schematic view illustrating another example of the network system according to an embodiment. Fig. 20 is a schematic block diagram of the network system of Fig. 19.

Referring to Figs. 19 and 20, a network system 10 according to the current embodiment includes an electrical appliance 300 for performing a preset function as one component constituting the network system 10 and a control device 400 for controlling the electrical appliance 300 as the other component constituting the network system 10.

The control device 400 may include a remote controller for controlling the electrical appliance 300 at a position spaced apart from the electrical appliance 300. The remote controller may include a mobile device. In the drawings, a washing machine is illustrated as an example of the electrical appliance. However, the present disclosure is not limited to a kind of electrical appliance. For example, a refrigerator, a cooking appliance, a dryer, an air conditioner, a cleaner, or a water purifier in addition to the washing machine may be applied.

The electrical appliance 300 includes a first communication unit communicably connected to a control device 400, a display unit 320 for displaying an operation state of the electrical appliance 300, a first input unit 330 for inputting a predetermined command to operate the electrical appliance 300, a memory 340 for storing operation information of the electrical appliance 300, and a main control unit 350 for controlling the above-described units.

The first communication unit 310 may be understood as a gateway connected to the control device 400. Also, the first communication unit 310 receives external information according to a control command of the main control unit 350 to transmit the received information into the main control unit 350 or transmits internal information of the electrical appliance 300 into the control device 400.

A second interface 370 for transmitting/receiving information (data) may be defined between the first communication unit 310 and the main control unit 350.

The control device 400 includes a second communication unit 410 communicably connected to the first communication unit 310, a display unit 420 for displaying a user interface of the control device 400, a second input unit 430 for inputting a predetermined command into the control device 400, a memory 440 for storing operation information of the control device 400 or the electrical appliance 300, and a control unit 450 for controlling the above-described units.

The second communication unit 410 receives the operation information of the electrical appliance 300 from the first communication unit 310. Also, the second communication unit 410 may transmit information related to a control command of the control device 400 into the first communication unit 310. A first interface 390 for communicating may be defined between the first communication unit 310 and the second communication unit 410.

The display unit 420 may display information related to an operation of the control device 400 or the electrical appliance 300. Also, a predetermined command may be inputted into the second input unit 430 to control the operation of the electrical appliance 300.

A plurality of information for performing a function of the control device 400 may be stored in the memory 440. The plurality of information may include first information for performing a proper function of the control device 400 or second information for performing a function of the electrical appliance 300 or operating the electrical appliance 300.

Fig. 21 is a flowchart illustrating a communication connection process between a plurality of components of Fig. 19.

Fig. 21 illustrates a communication connection process between the plurality of components constituting the network system 10 according to a first embodiment. For example, communication for transmitting/receiving information between a first component and a second component may start. Here, the first component may be a control device. The second component may be an object to be controlled by the control device, for example, an electrical appliance.

When the first component is turned on, a device code (a first device code) of the first component is recognized in the first component. Then, an IP (communication address) of the first communication unit 110 may be assigned. The device code may be a proper identification number (character) given when the first component is manufactured, installed, or sold. When the first component is turned on, information related to the device code may be transmitted into the first communication unit 310.

The IP may be set to a fixed IP or a variable (changeable) IP to communicate with the second component. Also, the IP may be assigned through a separate access point (AP) according to a communication method or may be assigned by self set of the first component. For example, the communication method may include Wifi, Bluetooth, or Zigbee.

Similarly, when the second component is turned on, a device code (a second device code) of the second component is recognized in the second component. Then, an IP of the second communication unit 410 may be assigned (S41 and S42).

For communication between the first component and the second component, a predetermined command may be inputted into the first component or the second component. For example, a predetermined command may be inputted into the first component defined as the control device. The predetermined command may be understood as executed predetermined information for controlling an operation of the second component.

The predetermined information may be a specific program (e.g., an application). The specific program may be previously stored in the first component, i.e., the memory 440 of the control device 400 (S43). When the predetermined command is inputted, a connection sequence for connecting the second component may occur in the first component. The connection sequence of the first component may be transmitted into the second component (S44).

Also, information of the first component and information of the second component may be exchanged with each other. The information exchanged between the first component and the second component may include an IP address and a device code of each of the components. The first and second components may recognize or search an opponent component (device) to directly exchange the information therebetween. Also, the information may be exchanged via a specific server for storing information of the first or second component (S45).

As the information of the first component and the second component are exchanged with each other, the first and second components may communicate with each other. When the first and second components communicate with each other, the information (data) may be transmitted/received therebetween (S46).

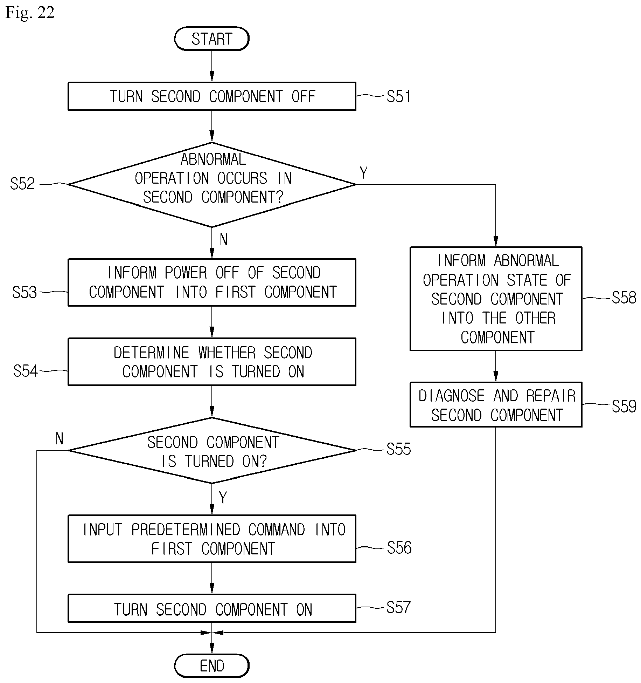

Fig. 22 is a flowchart illustrating a control method when a specific component is turned off according to an embodiment.

Referring to Fig. 22, a control method when the second component constituting a network system 10 according to a second embodiment is turned off will be described.

The second component is turned off. Here, the state in which the second component is turned off may include a state in which the second component is operated, and then the second component is turned off just or the second component is maintained in the power off state. The second component may include the electrical appliance 300 (S51).

When the second component is turned off, it is determined whether a cause of the power off state begins form an "abnormal state". For example, when a connection of a power code of the second component is released, or the first component is turned off by directly manipulating a power input part thereof, this is not determined as an "abnormal operation". However, when abnormal cause, i.e., a portion of the second component is abnormal, it may be recognized that the "abnormal operation" of the second component occurs (S52).

When the second component is turned off in a state where the abnormal operation of the second component is not recognized, the power off state of the second component may be displayed on the first component. Here, the first component may be the control device 400. Also, the method of displaying the power off state may include a voice or screen output (S53).

It may be determined whether it is intended to turn the second component on. For this, a predetermined input unit for turning the second component on/off may be displayed on the first component. The predetermined input unit may be provided as a separate button. Alternatively, the predetermined input unit may be displayed as a predetermined region on the display unit of the first component (S54).

When the second component is turned on, a predetermined command for turning the second component on is inputted into the first component. That is, when the predetermined input unit is provided as the separate button, the button may be pushed (S55). Also, when the predetermined input unit is provided as the predetermined region on the display unit, the predetermined command may be inputted in a touch screen method (S56).

The second component may be turned on according to the inputted command of the first component. Thus, the user may remotely control the power on/off of the electrical appliance. In the state where the second component is turned on, the second component may be turned off by using the first component. The power on/off state of the second component may be continuously displayed on the first component while the first and second components communicate with each other.

On the other hand, the power on/off state of the second component may be selectively displayed on the first component as necessary. For example, when the user inputs a specific command into the first component, a screen of the display unit of the first component may be converted to inrush in a power on/off control mode (S57).

In operation S52, when an occurrence of the abnormal operation of the second component is recognized, the abnormal operation state of the second component may become known to the other component. Here, the other component may include a first component defined as the control device 400 or a third component defined as a service center (S58).

When the abnormal state of the second component is known to the other component, the second component may be diagnosed or repaired. Here, a diagnosis program for diagnosing an operation state of the second component may be previously stored in the first component. The user may grasp a cause of the abnormal state of the second component by using the diagnosis program. In addition, the second component may communicate with the third component. Here, the second component may be remotely diagnosed by the third component (S59).

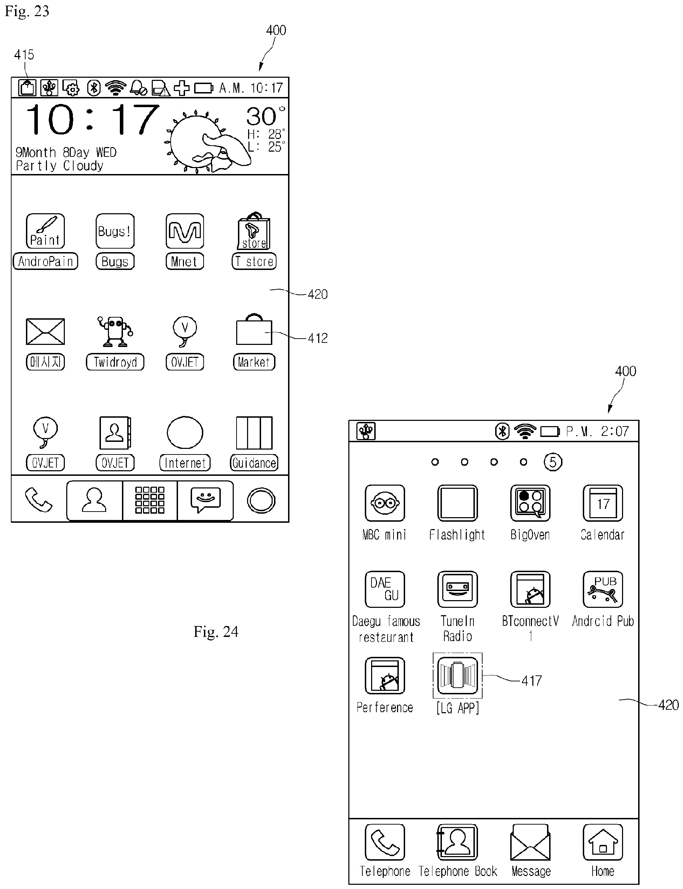

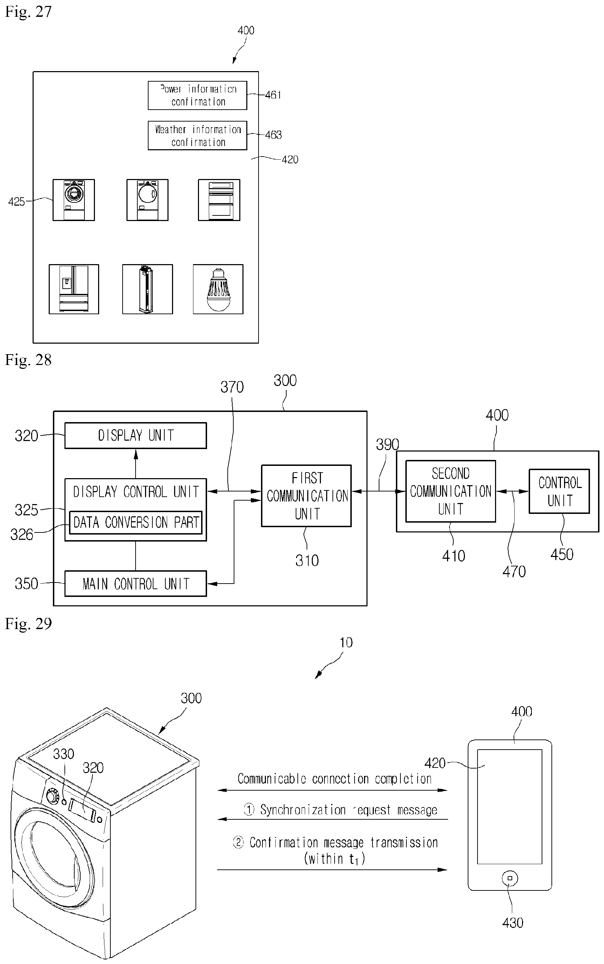

Figs. 23 to 26 are views illustrating a user interface of a specific component according to another embodiment. Figs. 27 to 26 are views illustrating a user interface of a specific component according to another embodiment.

Referring to Figs. 23 to 26, a specific component according to an embodiment, for example, a user interface using a control device 400 will be described.

The control device 40 may include a portable mobile phone or a tablet PC. Also, the control device 400 may be understood as a multi-function device which may perform a plurality of functions.

For example, the control device 400 may perform a plurality of functions such as voice/image call, a camera, schedule management, an Internet connection, and a control function of the electrical appliance. Also, a user interface (UI) when one function of the plurality of functions is executed and a user interface when the other function is executed are different from each other. That is to say, the user interface of the control device 400 may include a first user interface for remotely controlling the electrical appliance and a second user interface for performing at least one function except for the remote control.

The control device 400 may be connected to Internet and download specific information from the outside. The control device 400 may include a display unit 420 for displaying a specific content. At least one executable selection part for operating the control device 400 is displayed on the display unit 420.

The selection part includes a web market selection part 412 connected to a web server to download specific information. When the web market selection part 412 is executed, the control device 400 may be connected to the Internet and thus connected to a specific web server (for example, a web market for downloading a specific program). The user may input a specific command by touching the display unit 220. That is, to execute the plurality of selection parts including the web market selection part 420, the user may use a touch pen or a finger.

After the web market selection part 412 is executed, a control program (e.g., an application) of the electrical appliance may be searched. When the control program to be downloaded is searched, a searched result is displayed on the display unit 420. When the searched result is selected and executed, contents (e.g., a pop-up window) related to a process for downloading the control program may be displayed on the display unit 420. Then, the user may manipulate the displayed contents to download the control program. When the control program is completely downloaded, as shown in Fig. 24, a display part (icon) for displaying a control application 417 is generated on the display unit 420.

Also, the display unit 420 includes an update display informing part 415 for displaying specific information stored in the control device 400, for example, information for updating a specific program. When a function addition or correction item with respect to the control application 417 occur, the update display informing part 415 may be activated. Also, the user may update the application through the web server (web market).

In an example of the update method, when a web market execution part 412 is selected, words "update existence" with respect to an application in which an update item occurs in the applications stored in the control device 400 may be displayed. After the corresponding application is executed, the user may add or correct the function of the application according to an update message.

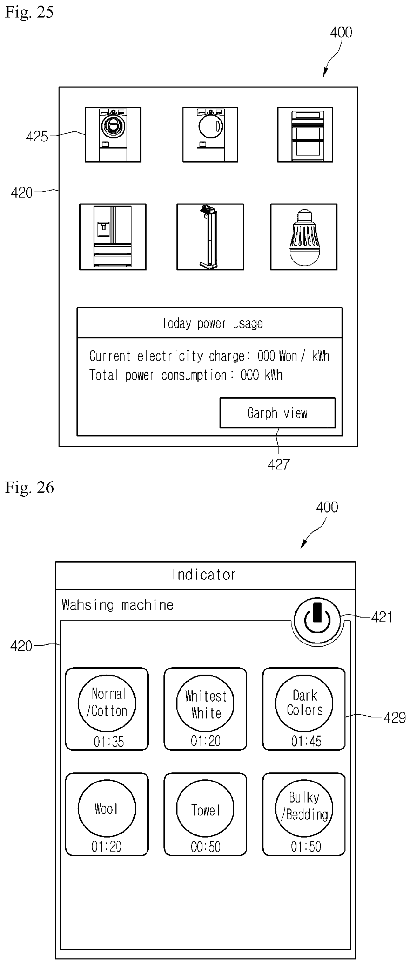

As shown in Fig. 24, when the control application 417 is executed on the display unit 420 on which a plurality of functions are selectably displayed, the application may be converted into an user interface which may controls the electrical appliance 300 of Fig. 25. That is, the control application may be executed to convert the second user interface (or first and second user interfaces) into the first user interface which is available.

As shown in Fig. 25, in the state where the control device 400 is converted into the control mode (the first user interface) of the electrical appliance, a selectable electrical appliance selection part 425 for controlling a specific electrical appliance may be selectably displayed on the display unit 420. Also, a power information selection part 428 for confirming information related to a power may be selectably displayed on the display unit 420. The information related to the power may include electricity charge information varied according to a time.

Fig. 26 illustrates a screen (an user interface) when a washing machine of a plurality of controllable electrical appliances is selected. A power source control part 421 for controlling a power on/off of the washing machine and a laundry selection part 429 for selecting a kind of laundry to be washed may be displayed on the display unit 420.

Another embodiment will be proposed.

The control device illustrated in Figs. 23 to 26 is characterized in that the control device is converted into a first user interface after a specific program such as an application is executed. However, unlike this, after the control device 400 is converted into the first user interface by using a specific conversion input part, the application may be executed to control the electrical appliance 300.

In a state where the first user interface is embodied in the display unit 420, when the specific conversion input part or program is executed, the first user interface may be converted into the second user interface which may be available.

Another embodiment of the control device on which the user interface is displayed will be described with reference to Fig. 27. Fig. 27 illustrates an optimized state in which the control device 400 remotely controls the electrical appliance 300. That is, the control device 400 may be an exclusive control device for only controlling the electrical appliance 300.

Thus, the conversion of the first user interface and the operation control of the electrical appliance 300 may be performed through the input of the predetermined input unit (or a conversion menu) without executing a separate application. When the control device 400 is turned on, as shown in Fig. 27, the display unit 420 for controlling the electrical appliance 300 may be displayed to a main screen.

An electrical appliance selection part 425 for selecting a specific electrical appliance of the plurality of electrical appliances, a power information selection part 461 for confirming power information, a weather information selection part 463 for confirming weather information may be displayed on the display unit 420. When a specific electrical appliance is selected using the electrical appliance selection part 425, the screen may be converted into a screen of Fig. 26. Also, a specific command may be inputted to control an operation of the electrical appliance 300.

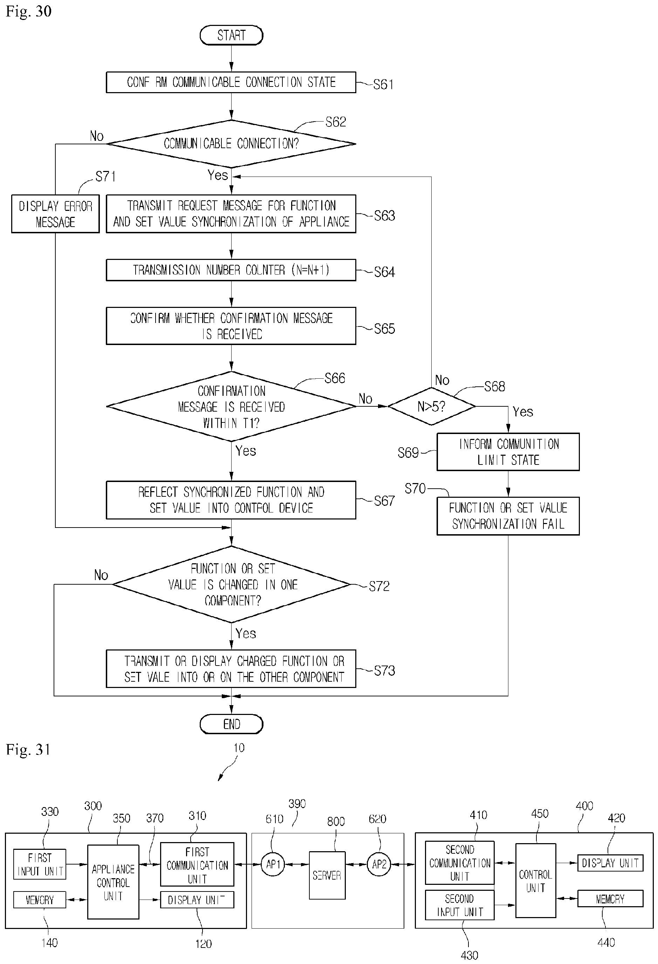

Fig. 28 is a schematic block diagram illustrating a network system for synchronizing components with each other according to another embodiment. Fig. 29 is a view illustrating a synchronized state between the components of Fig. 28. Fig. 30 is a flowchart illustrating a process of synchronizing the components of Fig. 28.

Referring to Fig. 28, an electrical appliance 300 according to another embodiment includes a first communication unit 310, a display unit 320, a display control unit 325 for controlling an operation of the display unit 320, and a main control unit 350 for controlling the electrical appliance 300, e.g., controlling a driving part of the electrical appliance 300.

A control device 400 includes a second communication unit 410 communicably connected to the first communication unit 310 to transmit/receive information (data) and a control unit 450 for controlling the second communication unit 410. Also, a second interface 370 for transmitting or receiving the information (data) is defined between the first communication unit 310 and the display control unit 325 or the main control unit 350. Also, a third interface 470 is defined between the second communication unit 410 and the control unit 450. Also, a first interface 390 for transmitting or receiving the information (data) is defined between the electrical appliance 300 and the control device 400.

The information (data) transmitted from the second communication unit 410 may be converted in data so that the information (data) is recognized in the electrical appliance 300. That is, the "data conversion process" may be defined as a process in which the information (data) transmitted through the second interface 370 and the third interface 470 or the first interface 390 are converted so that the information (data) is recognized in the control units 325 and 350. Also, this process may be understood as one process for communicating.

The data conversion process may be performed in the second interface 370, i.e., the first communication unit 310 and the display control unit 325 (a solid line arrow). Also, a data conversion part 326 may be provided in the display control unit 325. Alternatively, the data conversion part may also be provided in the main control unit 350. In this case, a data conversion process may be performed in the first communication unit 310 and the main control unit 350. Although the data conversion process is described in an electrical appliance in Fig. 28, the data conversion process may be similarly performed in the control device 400. The data conversion part may be provided in the control unit 450, and the data conversion process may be performed in the second communication unit 410 and the control unit 450.

Fig. 29 illustrates a process in which an electrical appliance 300 and a control device 400 are synchronized with each other. When the electrical appliance 300 and the control device 400 are communicably connected to each other, synchronization for calling in information of the electrical appliance 300 is performed in the control device 400.

The synchronization may include function synchronization for calling in various functions of the electrical appliance 300 and a set value synchronization for calling in a set state value of the electrical appliance 300. The function synchronization and the set value synchronization have similar processing process except for an object.

A synchronization process will be described. First, a synchronization request message is transmitted from the control device 400 toward the electrical appliance 300. Then, when a confirmation message is received from the electrical appliance 300 into the control device 400 within a preset time t1 (e.g., about 100 ms), the synchronization may be performed.

Although the synchronization request message is transmitted, the confirmation message is not received within the preset time t1, the synchronization request message may be transmitted again by a set number. If the confirmation message of the electrical appliance 300 is not received during the re-transmission, a synchronization error message may be displayed on the display unit 420. Through above-described method, the function synchronization or the set value synchronization of the electrical appliance may be performed.

Although the control device 400 transmits the synchronization request message, and the electrical appliance 300 transmits the confirmation message, the present disclosure is not limited thereto. For example, the electrical appliance 300 may transmit the synchronization request message, and the control device 400 may transmit the confirmation message.

When the function or set vale of one of the electrical appliance 300 and the control device 400 is changed, the changed function or set vale may be transmitted into the other one of the electrical appliance 300 and the control device 400 and displayed. That is, when the function or set valve of the electrical appliance 300 is changed, the changed content of the electrical appliance 300 may be transmitted into the control device 400, and the control device 400 may transmit a confirmation signal into the electrical appliance 300.

On the other hand, when the function or set value of the control device 400 is changed, the control device 400 may transmit the changed content, and the electrical appliance 300 may transmit the confirmation signal into the control device 400. Only the changed content (function or set value) of the opponent component may be displayed on the electrical appliance 300 or the control device 400.

A method of controlling a network system for synchronization will be described with reference to Fig. 20. First, it is confirmed whether the electrical appliance 300 and the control device 400 are communicably connected to each other (S61). When the communicable connection between the electrical appliance 300 and the control device 400 is completed, a request message for synchronizing a function or set value is transmitted from one device into the other device (S62 and S63). Then, when a message request is transmitted, the transmitted number is countered (N=N+1) (S64).

Then, it is confirmed whether the confirmation message is received from the other device (S65). When the confirmation message is received within a set time t1, a synchronized function or set value of the electrical appliance 300 is reflected into the control device 400. This is called a "first synchronization" (S66 and S67). On the other hand, when the confirmation message is not received within the set time t1, it is determined whether transmission number N is greater than 5. Here, "5" may be understood as a predetermined value for repeatedly transmitting the request message. Thus, the number may be set to different values (S68).

If the N value is less than 5, the process returns to the operation S63. On the other hand, it is recognized that the N value is greater than 5, a limit of the communication between the electrical appliance 300 and the control device 400 may be known to the outside through the electrical appliance 300 or the control device 400 (a screen display or sound). Thus, the synchronization of the function or set value of the electrical appliance 300 may be failed (S69 and S70).

When the communicable connection is not realized in the operation 62, an error message may be displayed on the control device 400 or the electrical appliance 300 (S71). After the operation S67, it is determined whether the function or set value is changed in one component of the electrical appliance 300 and the control device 400 (S72).

When the function or set value is changed, the changed function or set value may be transmitted into and/or displayed on the other component of the electrical appliance 300 and the control device 400. This may be called a "second synchronization" (S73).

Another embodiment will be described. The current embodiment is different from the first embodiment in that a component is additionally provided between the electrical appliance and the control device. Thus, the different points may be mainly described, and also, the same part as the first embodiment will be denoted by the description and reference numeral of the first embodiment.

Fig. 31 is a schematic block diagram illustrating a network system according to another embodiment. Referring to Fig. 31, a network system 10 according to another embodiment includes a server 800 disposed between an electrical appliance 300 and a control device 400 to store operation information of the electrical appliance 300 or the control device 400. The server 800 may be one component constituting the network system 10. Also, the server 800 may be understood as a component for performing a medium (manager) function for communication between the electrical appliance 300 and the control device 400.

For example, in Fig. 21, when a predetermined command for a communication command is inputted into a first component, a connection sequence may occur in the first component. The connection sequence may be transmitted into the server 800. Also, when a predetermined command is inputted into a second component, or the second component is turned on, the connection sequence may be automatically transmitted from the second component into the server 800. In Fig. 21, information of the first and second components may be exchanged with each other through the server 800. That is, the information of the first and second components may be transmitted and stored into the server 800.

While the first and second components communicate with each other, when information requested by the first or second component is stored in the server 800, the information may be transmitted just from the server 800. On the other hand, when the information is not stored in the server 800, one component may request the information to the opponent component.

The server 800 may be understood as the first or second component itself. When the second component is an electrical appliance, the server 800 may serve as the first component to communicate with the second component. On the other hand, when the first component is a control device, the server 800 may serve as the second component to communicate with the first component. As described above, the server including a storage device is provided between the first and second components to realize the communication between the first and second components, thereby improving communication reliability.

A communication method of a first interface 390 between the electrical appliance 300 and the control device 400 is a "Wifi", sharers 610 and 620 may be further provided. Each of the sharers 610 and 620 may be a wireless sharer as an access points (AP). The sharers 610 and 620 may include a first sharer 610 for setting communication between the electrical appliance 300 and the server 800 and a second sharer 620 for setting communication between the server 800 and the control device 400. Here, the first and second sharers 610 and 620 may be the same.

When the electrical appliance 300 and the control device 400 communicate with each other through the sharers 610 and 620, the IPs of first and second communication units 310 and 410 may be assigned from the sharers 610 and 620. As described above, when the Wife using the AP is applied as the communication method, a distance between the electrical appliance 300 and the control device 400 is not limited. Thus, the remote control of the control device 400 may be easily performed.

According to the embodiments, the energy source may be efficiently produced, used, distributed, and stored to effectively manage the energy source.

Also, the plurality of components may be easily synchronized to remotely monitor and control the other component by using one component.

According to the embodiments, the energy source may be effectively managed, and the energy charge may be reduced. Thus, industrial applicability may be significantly high.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A network system comprising: an electrical appliance (100) consuming energy generated in an energy supply source (10), the electrical appliance having a first device code; and a mobile device (200) exchanging information with the electrical appliance to be communicably connected to the electrical appliance, the mobile device having a second device code, wherein, when a command for communicable connection is inputted into the electrical appliance (100) or the mobile device (200), a connection sequence is generated from the component in which the command is inputted to exchange an IP address and the device code of each of the components (100,200) between one component generating the connection sequence and the other component receiving the connection sequence, and while the mobile device (200) communicates with the electrical appliance (100), the method is **characterized in that** the mobile device (200) is configured to receive electricity usage amount information of the electrical appliance (100),
the mobile device (200) is configured to receive energy information, which comprises electricity supply amount information from the energy supply source (10),
the mobile device (200) is configured to receive electricity supply amount information from the energy supply source (10) and electricity usage amount information from the electrical appliance (100) to enable a user of the mobile device (200) to compare the electricity supply amount information and the electricity usage amount information, thereafter,
when a command for controlling an operation of the electrical appliance (100) in the mobile device (200) is inputted, the electrical appliance (100) is operated on the basis of the operation command information transmitted from the mobile device (200) into the electrical appliance (100).

2. The network system according to claim 1, wherein the mobile device (200) is configured to communicate with the energy supply source (10).

3. The network system according to claim 1 or 2, wherein the mobile device (200) is configured to receive energy information, which comprises electricity charge information from the energy supply source (10).

4. The network system according to claim 1, further comprising an energy metering component (25) to transmit the electricity usage amount information, wherein the mobile device (200) communicates with the energy metering component (25).

5. The network system according to one of preceding claims, wherein the mobile device (200) directly or indirectly controls an operation of the electrical appliance (100).

6. The network system according to claim 5, wherein, when energy information transmitted from the energy supply source (10) corresponds to high price information or low price information, a message related to the energy information is transmitted into the mobile device.

7. The network system according to claim 6, wherein the message comprises reducing an electricity usage amount of the electrical appliance (100) into the mobile device (200), and
the mobile device (200) is configured to control an operation of the electrical appliance (100) according to the message.

8. The network system according to one of claims 5 to 7, wherein, when a command for operating the electrical appliance (100) is inputted, the electrical appliance (100) determines whether an operation start time of the electrical appliance (100) corresponds to on-peak time period or off-peak time period.

9. The network system according to claim 8, wherein when it is determined that the operation start time corresponds to the on-peak time period, a continuous progression confirmation message related to the operation of the electrical appliance (100) is displayed through a display unit of the electrical appliance (100).

10. The network system according to claim 9, wherein a reservation command to operate the energy consumption component after arriving of the off-peak time period is inputted through the electrical appliance (100) or the mobile device (200).

11. The network system according to claim 10, wherein when it is determined that the off-peak time period arrives, a message for informing the arrival of the off-peak time is transmitted to the mobile device (200).

12. The network system according to one of preceding claims, wherein the electrical appliance (100) or the mobile device (200) comprises:
a display unit (320,420) for displaying operation information;
a communication unit (310,410) for receiving information from the outside; and
a control unit (350,450) comprising a data conversion part for converting information transmitted from the communication unit.

13. The network system according to claim 12, wherein the communication unit and the control unit provided in one component of the electrical appliance and the mobile device converts information transmitted from the other component to recognize the one component.

## Patentansprüche

1. Netzsystem, das Folgendes umfasst: ein Elektrogerät (100), das Energie, die in einer Energiezufuhrquelle (10) erzeugt wird, verbraucht, wobei das Elektrogerät einen ersten Einrichtungscode besitzt; und ein mobiles Endgerät (200), das Informationen mit dem Elektrogerät austauscht, um mit dem Elektrogerät kommunikationstechnisch verbunden zu sein, wobei das mobile Endgerät einen zweiten Einrichtungscode besitzt, wobei dann, wenn eine Anweisung für eine kommunikationstechnische Verbindung in das Elektrogerät (100) oder das mobile Endgerät (200) eingegeben wird, eine Verbindungsfolge von der Komponente, in die die Anweisung eingegeben wird, erzeugt wird, um eine IP-Adresse und den Einrichtungscode jeder der Komponenten (100, 200) zwischen einer Komponente, die die Verbindungsfolge erzeugt, und der weiteren Komponente, die die Verbindungsfolge empfängt, auszutauschen, und, während das mobile Endgerät (200) mit der elektrischen Vorrichtung (100) kommuniziert,
das Verfahren **dadurch gekennzeichnet ist, dass**
das mobile Endgerät (200) konfiguriert ist, Stromverbrauchsmengeninformationen des Elektrogeräts (100) zu empfangen,
das mobile Endgerät (200) konfiguriert ist, Energieinformationen, die Stromzufuhrmengeninformationen umfassen, von der Energiezufuhrquelle (10) zu empfangen,
das mobile Endgerät (200) konfiguriert ist, Stromzufuhrmengeninformationen von der Energiezufuhrquelle (10) und Stromverbrauchsmengeninformationen vom Elektrogerät (100) zu empfangen, um einem Anwender des mobilen Endgeräts (200) zu ermöglichen, danach die Stromzufuhrmengeninformationen und die Stromverbrauchsmengeninformationen zu vergleichen, und
dann, wenn eine Anweisung zum Steuern eines Betriebs des Elektrogeräts (100) in das mobile Endgerät (200) eingegeben wird, das Elektrogerät (100) auf der Grundlage der Betriebsanweisungsinformationen, die vom mobilen Endgerät (200) in das Elektrogerät (100) übertragen werden, betrieben wird.

2. Netzsystem nach Anspruch 1, wobei das mobile Endgerät (200) konfiguriert ist, mit der Energiezufuhrquelle (10) zu kommunizieren.

3. Netzsystem nach Anspruch 1 oder 2, wobei das mobile Endgerät (200) konfiguriert ist, Energieinformationen zu empfangen, die Elektrizitätsladungsinformationen von der Energiezufuhrquelle (10) umfassen.

4. Netzsystem nach Anspruch 1, das ferner eine Energiemesskomponente (25) umfasst, um die Stromverbrauchsmengeninformationen zu übertragen, wobei das mobile Endgerät (200) mit der Energiemesskomponente (25) kommuniziert.

5. Netzsystem nach einem vorhergehenden Anspruch, wobei das mobile Endgerät (200) einen Betrieb des Elektrogeräts (100) direkt oder indirekt steuert.

6. Netzsystem nach Anspruch 5, wobei dann, wenn Energieinformationen, die von der Energiezufuhrquelle (10) übertragen werden, Hochpreisinformationen oder Niedrigpreisinformationen entsprechen, eine Nachricht, die mit den Energieinformationen in Beziehung steht, an das mobile Endgerät übertragen wird.

7. Netzsystem nach Anspruch 6, wobei die Nachricht an das mobile Endgerät (200) ein Verringern einer Stromverbrauchsmenge des Elektrogeräts (100) umfasst und
das mobile Endgerät (200) konfiguriert ist, einen Betrieb des Elektrogeräts (100) gemäß der Nachricht zu steuern.

8. Netzsystem nach einem der Ansprüche 5 bis 7, wobei dann, wenn eine Anweisung zum Betreiben des Elektrogeräts (100) eingegeben wird, das Elektrogerät (100) bestimmt, ob eine Betriebsstartzeit des Elektrogeräts (100) einem Hauptlastzeitraum oder einem Schwachlastzeitraum entspricht.

9. Netzsystem nach Anspruch 8, wobei dann, wenn bestimmt wird, dass die Betriebsstartzeit dem Hauptlastzeitraum entspricht, eine Bestätigungsnachricht für ein kontinuierliches Fortschreiten in Bezug auf den Betrieb des Elektrogeräts (100) über eine Anzeigeeinheit des Elektrogeräts (100) angezeigt wird.

10. Netzsystem nach Anspruch 9, wobei eine Reservierungsanweisung, die Energieverbrauchskomponente zu betreiben, nachdem sich der Nebenlastzeitraum eingestellt hat, über das Elektrogerät (100) oder das mobile Endgerät (200) eingegeben wird.

11. Netzsystem nach Anspruch 10, wobei dann, wenn bestimmt wird, dass sich die Schwachlastzeit eingestellt hat, eine Nachricht zum Informieren über das Einstellen der Schwachlastzeit zum mobilen Endgerät (200) übertragen wird.

12. Netzsystem nach einem der vorhergehenden Ansprüche, wobei das Elektrogerät (100) oder das mobile Endgerät (200) Folgendes umfasst:
eine Anzeigeeinheit (320, 420) zum Anzeigen von Betriebsinformationen;
eine Kommunikationseinheit (310, 410) zum Empfangen von Informationen von außerhalb und
eine Steuereinheit (350, 450), die einen Datenumsetzteil zum Umsetzen von Informationen, die von der Kommunikationseinheit übertragen wurden, umfasst.

13. Netzsystem nach Anspruch 12, wobei die Kommunikationseinheit und die Steuereinheit in einer Komponente des Elektrogeräts bereitgestellt sind und das mobile Endgerät Informationen umsetzt, die von der weiteren Komponenten übertragen werden, um die eine Komponente zu erkennen.

## Revendications

1. Système de réseau comportant : un appareil électrique (100) consommant de l'énergie générée dans une source de fourniture d'énergie (10), l'appareil électrique ayant un premier code de dispositif ; et un dispositif mobile (200) échangeant des informations avec l'appareil électrique pour être relié à l'appareil électrique de manière communicante, le dispositif mobile ayant un second code de dispositif, dans lequel, lorsqu'une commande de liaison pouvant être communiquée est entrée dans l'appareil électrique (100) ou le dispositif mobile (200), une séquence de connexion est générée à partir du composant dans lequel la commande est entrée pour échanger une adresse IP et le code de dispositif de chacun des composants (100, 200) entre un composant générant la séquence de connexion et l'autre composant recevant la séquence de connexion, et pendant que le dispositif mobile (200) communique avec l'appareil électrique (100),
le procédé est **caractérisé en ce que**
le dispositif mobile (200) est configuré pour recevoir des informations de quantité d'utilisation d'électricité du dispositif électrique (100),
le dispositif mobile (200) est configuré pour recevoir des informations énergétiques, qui comportent des informations de quantité de fourniture d'électricité provenant de la source de fourniture d'énergie (10),
le dispositif mobile (200) est configuré pour recevoir des informations de quantité de fourniture d'électricité provenant de la source de fourniture d'énergie (10) et des informations de quantité d'utilisation d'électricité provenant de l'appareil électrique (100) pour permettre à un utilisateur du dispositif mobile (200) de comparer les informations de quantité de fourniture d'électricité et les informations de quantité d'utilisation d'électricité par la suite,
lorsqu'une commande destinée à commander un fonctionnement du dispositif électrique (100) dans le dispositif mobile (200) est entrée, l'appareil électrique (100) fonctionne sur la base des informations de commande de fonctionnement transmises à partir du dispositif mobile (200) dans l'appareil électrique (100).

2. Système de réseau selon la revendication 1, dans lequel le dispositif mobile (200) est configuré pour communiquer avec la source de fourniture d'énergie (10).

3. Système de réseau selon la revendication 1 ou 2, dans lequel le dispositif mobile (200) est configuré pour recevoir des informations énergétiques, qui comportent des informations de facture d'électricité provenant de la source de fourniture d'énergie (10).

4. Système de réseau selon la revendication 1, comportant en outre un composant de mesure d'énergie (25) pour transmettre les informations de quantité d'utilisation d'électricité, dans lequel le dispositif mobile (200) communique avec le composant de mesure d'énergie (25).

5. Système de réseau selon l'une des revendications précédentes, dans lequel le dispositif mobile (200) commande directement ou indirectement un fonctionnement de l'appareil électrique (100).

6. Système de réseau selon la revendication 5, dans lequel, lorsque les informations d'énergie transmises à partir de la source de fourniture d'énergie (10) correspondent à des informations de tarif haut ou à des informations de tarif bas, un message lié aux informations énergétique est transmis dans le dispositif mobile.

7. Système de réseau selon la revendication 6, dans lequel le message comporte la réduction d'une quantité d'utilisation d'électricité de l'appareil électrique (100) dans le dispositif mobile (200), et
le dispositif mobile (200) est configuré pour commander un fonctionnement de l'appareil électrique (100) en fonction du message.

8. Système de réseau selon l'une des revendications 5 à 7, dans lequel, lorsqu'une commande destinée à faire fonctionner l'appareil électrique (100) est entrée, l'appareil électrique (100) détermine si une heure de début de fonctionnement de l'appareil électrique (100) correspond à une période d'heure creuse ou à une période d'heure pleine.

9. Système de réseau selon la revendication 8, dans lequel lorsqu'il est déterminé comme l'heure de début de fonctionnement correspond à la période d'heure creuse, un message de progression continue lié au fonctionnement de l'appareil électrique (100) est affiché via une unité d'affichage de l'appareil électrique (100).

10. Système de réseau selon la revendication 9, dans lequel une commande de réservation pour faire fonctionner le composant de consommation d'énergie après l'arrivée de la période d'heure pleine est entrée via l'appareil électrique (100) ou le dispositif mobile (200).

11. Système de réseau selon la revendication 10, dans lequel lorsqu'il est déterminé que la période d'heure pleine arrive, un message destiné à informer de l'arrivée de l'heure pleine est transmis au dispositif mobile (200).

12. Système de réseau selon l'une des revendications précédentes, dans lequel l'appareil électrique (100) ou le dispositif mobile 200 comporte :
une unité d'affichage (320, 420) pour afficher des informations de fonctionnement ;
une unité de communication (310, 410) pour recevoir des informations provenant de l'extérieur ; et
une unité de commande (350, 450) comportant une partie de conversion de données pour convertir des informations transmises à partir de l'unité de communication.

13. Système de réseau selon la revendication 12, dans lequel l'unité de communication et l'unité de commande agencées dans un composant de l'appareil électrique et du dispositif mobile convertissent des informations transmises à partir de l'autre composant pour reconnaître ce composant.
